(19) Europäisches Patentamt
European Patent Office
Office européen des brevets

(11) **EP 4 541 777 A1**

(12) **EUROPEAN PATENT APPLICATION**
published in accordance with Art. 153(4) EPC

(43) Date of publication:
**23.04.2025 Bulletin 2025/17**

(21) Application number: **23823864.6**

(22) Date of filing: **09.06.2023**

(51) International Patent Classification (IPC):
**C03C 3/091** (2006.01)   **C03C 3/093** (2006.01)
**C03C 21/00** (2006.01)

(52) Cooperative Patent Classification (CPC):
**C03C 3/097; C03C 3/091; C03C 21/002**

(86) International application number:
**PCT/JP2023/021632**

(87) International publication number:
**WO 2023/243574 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 JP 2022096854**
**27.12.2022 JP 2022210494**

(71) Applicant: **AGC INC.**
**Chiyoda-ku,**
**Tokyo 1008405 (JP)**

(72) Inventors:
• **IMAKITA Kenji**
**Tokyo 100-8405 (JP)**
• **AKIBA Shusaku**
**Tokyo 100-8405 (JP)**

(74) Representative: **Müller-Boré & Partner**
**Patentanwälte PartG mbB**
**Friedenheimer Brücke 21**
**80639 München (DE)**

(54) **GLASS FOR CHEMICAL STRENGTHENING, AND GLASS**

(57)    The purpose of the present invention is to provide: glass for chemical strengthening for obtaining a chemically strengthened glass which exhibits excellent strengthening properties and characteristics which are suitable for cover glass; and glass. Glass for chemical strengthening, said glass comprising, when displayed as a mol% based on oxide content, $SiO_2$ in the amount of 50-65%, $Al_2O_3$ in the amount of 15-23%, $B_2O_3$ in the amount of 2-10%, $P_2O_5$ in the amount of 0-15%, ZnO in the amount of 0-15%, MgO in the amount of 0-10%, CaO in the amount of 0-15%, $Li_2O$ in the amount of 3-15%, $Na_2O$ in the amount of 2.5-15%, $K_2O$ in the amount of 0-5%, $ZrO_2$ in the amount of 0-5%, $Y_2O_3$ in the amount of 0-5%, and $TiO_2$ in the amount of 0-5%, wherein $[Li_2O]/([Na_2O]+[K_2O])$ is 0.5-3.5, and $[Al_2O_3]+[Li_2O]$ is 27-35%. The [] in the formulae represent the content of each component denoted inside the brackets when displayed as a mol% based on oxide content thereof.

*FIG. 1*

EP 4 541 777 A1

**Description**

TECHNICAL FIELD

The present invention relates to a glass for chemical strengthening and a glass.

BACKGROUND ART

A glass used as a cover glass for a mobile terminal or the like is required to have high strength, be capable of being subjected to 3D molding, and have excellent transparency, scratch resistance, and charging properties. In addition, from the viewpoint of SDGs, there is an increasing need for a glass having a low viscosity and a low melting temperature.

One method of increasing the strength of the glass is to subject the glass to an ion exchange treatment to obtain a chemically strengthened glass. The chemically strengthened glass is a glass obtained by bringing a glass into contact with a molten salt such as sodium nitrate to cause ion exchange between an alkali metal ion contained in the glass and an alkali metal ion contained in the molten salt and having a larger ion radius, and forming a compressive stress layer on a surface portion of the glass. The strength of the chemically strengthened glass greatly depends on a stress profile represented by a compressive stress value with the depth from the glass surface as a variable.

Patent Literature 1 describes a method of performing a two-stage ion exchange treatment using a glass for chemical strengthening containing lithium. According to this method, in the glass, a surface portion may have a large compressive stress due to sodium-potassium exchange, and a deeper portion may have a slightly smaller compressive stress due to lithium-sodium exchange.

On the other hand, when the compressive stress layer is formed on the surface portion of the glass, a tensile stress (hereinafter, also abbreviated as CT) is necessarily generated in a center portion of the glass according to a total surface compressive stress. When the tensile stress value is too large, the glass article cracks severely and is scattered into fragments when broken. When the CT is larger than a threshold value (hereinafter, also abbreviated as a CT limit), the number of fragments during damage explosively increases.

Therefore, in a chemically strengthened glass, while the surface compressive stress is set to be large and the compressive stress layer is formed to a deeper portion, the total surface compressive stress is designed such that the CT value does not exceed the CT limit (hereinafter, in the case of exceeding the limit, it will be abbreviated as exceeding the CT limit).

CITATION LIST

PATENT LITERATURE

Patent Literature 1: JP2013-536155A

SUMMARY OF INVENTION

TECHNICAL PROBLEM

As described above, the glass used as a cover glass is required to have high strength, be capable of being subjected to 3D molding, have excellent transparency, scratch resistance, and charging properties, and have a low viscosity and a low melting temperature.

Two physical properties necessary for increasing the strength of the glass are considered to be important: (1) high fracture toughness, and (2) excellent strengthening properties. Regarding the latter (2) strengthening properties, it is considered that the easier it is to strengthen the glass by an ion exchange treatment (the larger the surface compressive stress during chemical strengthening), the better.

However, as a result of extensive studies, the inventors of the present invention have found that there is an optimal range for the strengthening properties for chemical strengthening using sodium nitrate from the viewpoint of not exceeding the CT limit and ensuring drop strength.

Therefore, an object of the present invention is to provide a glass for chemical strengthening and a glass for obtaining a chemically strengthened glass that has excellent strengthening properties and exhibits properties suitable for a cover glass.

SOLUTION TO PROBLEM

As a result of studying the above problems, a composition range for a $Li_2O$-$Al_2O_3$-$SiO_2$-based glass for chemical strengthening and chemically strengthened glass that satisfies the above properties has been found, and the present invention has been completed.

A first aspect of the present invention provides a glass for chemical strengthening including, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5, and
$[Al_2O_3]+[Li_2O]$ is 27% to 35%,
provided that in the formulas, [ ] indicates a content of each component described in the parentheses in mol% in terms of oxides.

In addition, a second aspect of the present invention provides a glass including, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 27% to 35%, and
an entropy function S value of alkali ions represented by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [ ] indicates a content of each component described in the parentheses in mol% in terms of oxides, and a base of log is 10.

In addition, a third aspect of the present invention provides a $Li_2O$-$Al_2O_3$-$SiO_2$-based glass for chemical strengthening, including:

2% or more of $B_2O_3$ in mol% in terms of oxides, in which
a Young's modulus is more than 76 GPa,
a surface compressive stress $CS_0$ is 200 MPa to 450 MPa and a compressive stress layer depth DOC is 70 $\mu$m to 120 $\mu$m when chemical strengthening is performed using 100 mass% sodium nitrate at 380°C for 4 hours, and
a temperature ($T_2$) at which a viscosity is $10^2$ dPa·s is 1650°C or lower.

In addition, a fourth aspect of the present invention provides a glass for chemical strengthening including, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 22% to 35%, and
a Young's modulus is 77 GPa or more,
provided that in the formulas, [ ] indicates a content of each component described in the parentheses in mol% in terms of oxides.

In addition, a fifth aspect of the present invention provides a glass including, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 22% to 35%,
a Young's modulus is 77 GPa or more, and
an entropy function S value of alkali ions represented by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [ ] indicates a content of each component described in the parentheses in mol% in terms of oxides, and a base of log is 10.

ADVANTAGEOUS EFFECTS OF INVENTION

The glass for chemical strengthening according to the first aspect of the present invention satisfies a specific composition range, and in particular, the total content of $Al_2O_3$ and $Li_2O$ and the ratio of the content of $Li_2O$ to the total content of $Na_2O$ and $K_2O$ are within specific ranges. Accordingly, it is possible to obtain a chemically strengthened glass having excellent fracture toughness and strengthening properties, and thus high strength, and having excellent 3D moldability, charging properties, and scratch resistance, and the glass can be melted at a low temperature because of having a low viscosity, and can have a reduced amount of $CO_2$ generated during production.

The glass according to the second aspect of the present invention satisfies a specific composition range, and in particular, the total content of $Al_2O_3$ and $Li_2O$, the ratio of the content of $Li_2O$ to the total content of $Na_2O$ and $K_2O$, and the entropy function value of the alkali ion are within specific ranges. Accordingly, the glass according to the present invention can have excellent fracture toughness and strengthening properties, and thus high strength, can have excellent 3D moldability, charging properties, and scratch resistance, can be melted at a low temperature because of having a low viscosity, and can have a reduced amount of $CO_2$ generated during production.

The $Li_2O$-$Al_2O_3$-$SiO_2$-based glass for chemical strengthening according to the third aspect of the present invention has a specific composition range and strengthening properties and a low viscosity. Accordingly, the $Li_2O$-$Al_2O_3$-$SiO_2$-based glass for chemical strengthening according to the present invention can provide a chemically strengthened glass having excellent strength, 3D moldability, charging properties, and scratch resistance, can be melted at a low temperature, and can have a reduced amount of $CO_2$ generated during production.

The glass for chemical strengthening according to the fourth aspect of the present invention satisfies a specific composition range, and in particular, the total content of $Al_2O_3$ and $Li_2O$ and the ratio of the content of $Li_2O$ to the total content of $Na_2O$ and $K_2O$ are within specific ranges. Accordingly, it is possible to obtain a chemically strengthened glass having excellent fracture toughness and strengthening properties, and thus high strength, and having excellent 3D moldability, charging properties, and scratch resistance, and the glass can be melted at a low temperature because of having a low viscosity, and can have a reduced amount of $CO_2$ generated during production.

The glass according to the fifth aspect of the present invention satisfies a specific composition range, and in particular, the total content of $Al_2O_3$ and $Li_2O$, the ratio of the content of $Li_2O$ to the total content of $Na_2O$ and $K_2O$, and the entropy function value of the alkali ion are within specific ranges. Accordingly, the glass according to the present invention can have excellent fracture toughness and strengthening properties, and thus high strength, can have excellent 3D moldability, charging properties, and scratch resistance, can be melted at a low temperature because of having a low viscosity, and can have a reduced amount of $CO_2$ generated during production.

BRIEF DESCRIPTION OF DRAWINGS

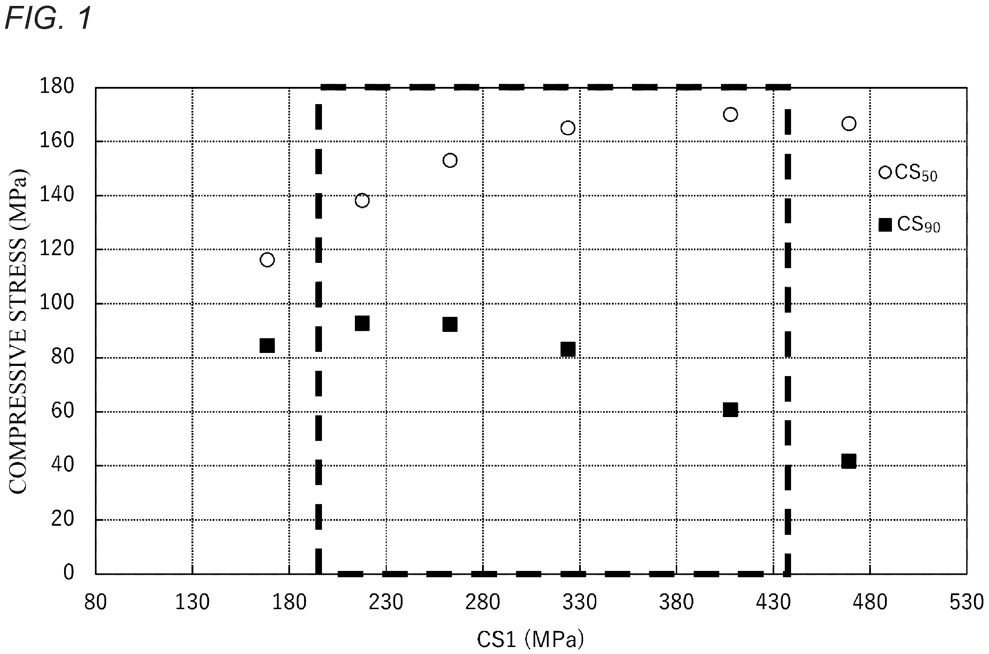

FIG. 1 is a diagram obtained by plotting, in a horizontal axis, CS1 (calculated value of a surface compressive stress $CS_0$ when strengthening is performed using 100% $NaNO_3$ at 380°C for 4 hours) and in a vertical axis, calculated values of $CS_{50}$ (circle) and $CS_{90}$ (square) in a stress profile of a glass, which are obtained by strengthening a specific glass satisfying a composition in the present invention using 100% $NaNO_3$ at 380°C and optimizing a strengthening time to maximize a CT in a range not larger than a CT limit. The sheet thickness is assumed to be 0.7 mm. A portion enclosed by the dotted line is a range that exhibits optimal stress properties.

FIG. 2 is a diagram showing a stress profile of a chemically strengthened glass obtained by chemical strengthening of a glass in Example 5.

FIG. 3 is a diagram illustrating a sample for use in measuring a fracture toughness value by using a DCDC method.

FIG. 4 is a diagram showing a $K_I$-v curve showing a relationship between a stress intensity factor $K_I$ and a crack growth rate v for use in measuring the fracture toughness value by using the DCDC method.

DESCRIPTION OF EMBODIMENTS

In the present description, "to" indicating a numerical range is used in the sense of including the numerical values set forth before and after the "to" as a lower limit value and an upper limit value, and unless otherwise specified, "to" is used hereinafter in the present description with the same meaning.

In the present description, a "stress profile" represents a compressive stress value with the depth from a glass surface as a variable. In the present description, DOC is a depth of a potion from the glass surface at which the stress is zero in the stress profile. The DOC can be estimated by slicing a cross section of a glass and analyzing the sliced sample with a birefringence imaging system. Examples of the birefringence imaging system include a birefringence imaging system Abrio-IM manufactured by Tokyo Instruments Inc. In addition, the DOC can also be estimated using scattered light photoelasticity. In this method, when light is incident on the glass surface and the polarization of the scattered light is analyzed, the stress profile can be measured and the DOC can be estimated. An "internal tensile stress CT" refers to a tensile stress value at a depth of 1/2 of a sheet thickness t of the glass.

In the present description, the stress profile can be measured by a method using a combination of an optical waveguide surface stress meter and a birefringence stress meter, or a method using a combination of an optical waveguide surface stress meter and a scattered light photoelastic stress meter.

It is known that the method using the optical waveguide surface stress meter can accurately measure the stress of the glass in a short time. Examples of the optical waveguide surface stress meter include FSM-6000 manufactured by Orihara Industrial Co., Ltd. A combination of FSM-6000 with attached software Fsm-V enables highly accurate stress measurement.

However, in principle, the optical waveguide surface stress meter can measure the stress only when the refractive index decreases from the surface toward the inside of a sample. In a chemically strengthened glass, a layer obtained by substituting sodium ions inside the glass with external potassium ions has a refractive index that decreases from the surface toward the inside of the sample, and thus the stress can be measured by using the optical waveguide surface stress meter. However, a stress of a layer obtained by substituting lithium ions inside the glass with external sodium ions cannot be measured by using the optical waveguide surface stress meter. Therefore, in the case where a lithium-containing glass is subjected to an ion exchange treatment using a sodium-containing molten salt, a depth ($D_K$) at which the compressive stress value measured by using the optical waveguide surface stress meter is zero is not the true compressive stress layer depth.

The stress can be measured by a method using the birefringence stress meter, regardless of a refractive index distribution. Examples of the birefringence stress meter include birefringence imaging system Abrio-IM manufactured by CRi. However, in order to measure the stress using the birefringence stress meter, the glass sample must be processed into a thin piece, and since it is particularly difficult to precisely process the edges, it is difficult to accurately determine the stress value near the glass surface. Using the birefringence stress meter in combination with an optical waveguide surface stress meter enables accurate stress measurement. The scattered light photoelastic stress meter is, for example, SLP2000 manufactured by Orihara Industrial Co., Ltd. In this method, by analyzing polarization properties of the weak scattered light emitted from the light passing through the glass, the stress inside the glass can be measured. However, near the glass surface layer, the influence of the intensity of the scattered light in the outermost surface layer is greater than that of the intensity of the scattered light from inside of the glass, making it difficult to accurately measure the stress near the glass surface layer. Using the scattered light photoelastic stress meter in combination with an optical waveguide surface stress meter enables accurate stress measurement.

In the present description, the "chemically strengthened glass" refers to a glass after a chemical strengthening treatment, and a "glass for chemical strengthening" refers to a glass before a chemical strengthening treatment.

In the present description, a glass composition is expressed in mol% in terms of oxides. In the present description, "not substantially contained" means that a component has a content equal to or less than an impurity level contained in raw materials and the like, that is, the component is not intentionally contained. Specifically, for example, the content is preferably less than 0.1 mass%, more preferably less than 0.05 mass%, and still more preferably less than 0.01 mass%.

(First Aspect)

<Glass for Chemical Strengthening>

(Composition)

A glass for chemical strengthening according to a first aspect of the present invention (hereinafter, may be referred to as the present glass for strengthening) contains, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;

3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5, and
$[Al_2O_3]+[Li_2O]$ is 27% to 35%.

In the formulas, [ ] indicates a content of each component described in the parentheses, in mol% in terms of oxides.

The present glass for strengthening satisfying the above composition is likely to form a preferred stress profile by a chemical strengthening treatment, does not exceed a CT limit, and can ensure drop strength. FIG. 1 is a diagram obtained by plotting, in a horizontal axis, CS1 (hereinafter, the CS1 is also referred to as NaCS, and the CS1 is a calculated value of a surface compressive stress $CS_0$ when a specific, i.e., the present glass for strengthening satisfying the above composition is subjected to strengthening using 100% $NaNO_3$ at 380°C for 4 hours) and in a vertical axis, calculated values of $CS_{50}$ (circle) and $CS_{90}$ (square) in a stress profile of a glass, which are obtained by subjecting a specific, i.e., the present glass for strengthening satisfying the above composition to chemical strengthening using 100% $NaNO_3$ at 380°C and optimizing a strengthening time to maximize a CT in a range not larger than a CT limit. The sheet thickness of the glass in the calculation is assumed to be 0.7 mm.

In FIG. 1, the range enclosed by the dotted line is a range that is not larger than the CT limit and that exhibits optimal stress properties from the viewpoint of ensuring the drop strength. Hereinafter, description will be made. The $CS_{50}$ is a compressive stress value at a depth of 50 $\mu$m from the glass surface, and is a value related to the strength when a mobile terminal or the like having a chemically strengthened glass as a cover glass is dropped onto ground containing fine sand. In addition, the $CS_{90}$ is a compressive stress value at a depth of 90 $\mu$m from the glass surface, and is a value related to the strength of the chemically strengthened glass when dropped onto ground containing coarse sand. Examples of a method for testing the strength of a cover glass include a method of evaluating the strength of the glass by dropping it onto sandpaper. The $CS_{50}$ corresponds to the strength when #180 sandpaper is used, and the $CS_{90}$ corresponds to the strength when #80 sandpaper is used.

FIG. 1 shows an optimal range for the CS1, assuming a single chemical strengthening process using 100% $NaNO_3$ at 380°C. When the CS1 increases, the DOC is smaller due to the constraint of the CT limit. That is, when the CS1 is too large, the depth from the glass surface (DOC), which is the point inside the glass where the compressive stress and the tensile stress are balanced, is smaller. As a result, the $CS_{90}$ tends to be small. In addition, when the CS1 is smaller, the DOC can be increased, but the stress is generally smaller throughout the entire depth direction, and the $CS_{50}$ and the $CS_{90}$ tend to be small. As a result, for example, in FIG. 1, in a region where the CS1 is more than about 440 MPa to 450 MPa, the $CS_{90}$ value is less than 50 MPa, and the strengthening properties are insufficient. In addition, in a region where the CS1 is less than about 200 MPa, the $CS_{50}$ is less than 120 MPa, and the strengthening properties are insufficient. In the range enclosed by the dotted line in FIG. 1, the $CS_{50}$ value is 120 MPa or more and the $CS_{90}$ value is 50 MPa or more, so that the strengthening properties are excellent and the glass exhibits properties suitable for a cover glass. Therefore, from FIG. 1, the optimal range for the CS1 is preferably from 200 MPa to 450 MPa, and particularly preferably from about 200 MPa to 440 MPa.

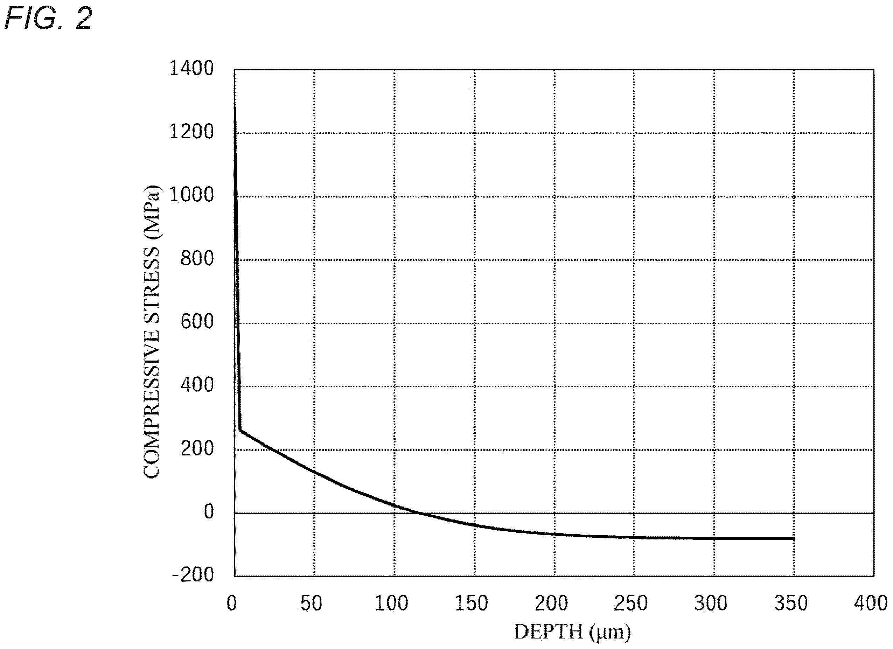

Note that, FIG. 1 shows the result of a single chemical strengthening process using 100% $NaNO_3$ at 380°C (hereafter, referred to as one-stage strengthening). The CS1 index and the optimal range thereof obtained here can also be applied to the design of a stress profile (hereinafter, referred to as a two-stage strengthening stress profile) obtained by two chemical strengthening processes (hereinafter, referred to as a two-stage strengthening) as shown in FIG. 2.

Generally, in the two-stage strengthening stress profile, a deep stress layer is often formed by Na→Li exchange using a molten salt containing a large amount of $NaNO_3$ (exchange of Na ions in the molten salt with Li ions in the glass) in the first chemical strengthening process, and a surface stress layer is often formed by K→Na exchange using a molten salt containing a large amount of $KNO_3$ (exchange of K ions in the molten salt with Na ions in the glass) in the second strengthening process. For the optimization of the $CS_{50}$ and the $CS_{90}$ in the deep layer, the influence of the first chemical strengthening process is more dominant than the influence of the second chemical strengthening process, and it is important to optimize the deep stress layer by Na→Li exchange in the first chemical strengthening process.

The optimization method and concept of the above chemical strengthening process are similar to those of in the case of the one-stage strengthening using 100% $NaNO_3$ at 380°C, so that the CS1 index and the optimal range thereof can also be applied to the stress design of the two-stage strengthening. That is, by using, as an index, the surface layer CS when strengthening is performed for 4 hours in 100% $NaNO_3$ at 380°C, it is possible to select the optimal range for the glass composition for designing the two-stage strengthening stress profile.

In the present invention, the index is created based on the results for a sheet thickness of 0.7 mm in FIG. 1, but the index obtained can be applied to a glass for chemical strengthening having a sheet thickness of 0.4 mm to 1.5 mm. In addition, in the present invention, the index is created based on the results for a glass cooled at a cooling rate of 0.5°C/min, but the index obtained can also be applied to a glass cooled at a cooling rate of 0.5°C/min to 1000°C/min. By satisfying the above composition range, the present glass for strengthening can achieve optimal stress properties during chemical strengthening using sodium nitrate.

Hereinafter, the glass composition of the present glass for strengthening will be described.

$SiO_2$ is a component that constitutes a glass framework. It is also a component that improves the chemical durability and a component that reduces the generation of cracks when the glass surface is scratched. The content of $SiO_2$ is 50% or more, preferably 52% or more, more preferably 54% or more, still more preferably 55% or more, and particularly preferably 56% or more, in order to improve the chemical durability.

The content of $SiO_2$ is 65% or less, preferably 62% or less, more preferably 60% or less, still more preferably 59% or less, and particularly preferably 58% or less, in order to improve the meltability of the glass.

$Al_2O_3$ is 15% or more, preferably 16% or more, more preferably 17% or more, still more preferably 19% or more, particularly preferably 20% or more, and most preferably 20.5% or more, in order to improve the ion exchangeability during chemical strengthening and increase the surface compressive stress after strengthening, or to increase the glass transition temperature (Tg) and the Young's modulus.

In addition, when the content of $Al_2O_3$ is too large, the viscosity increases and the devitrification properties deteriorate. The content of $Al_2O_3$ is 25% or less, preferably 23% or less, more preferably 22% or less, and still more preferably 21.5% or less.

When the content of $B_2O_3$ is small, the viscosity increases, and when the content of $B_2O_3$ is too large, the chemical resistance deteriorates. The content of $B_2O_3$ is 2% or more, preferably 2.5% or more, preferably 3% or more, more preferably 4% or more, and still more preferably 5% or more. $B_2O_3$ is 10% or less, preferably 9% or less, more preferably 8% or less, still more preferably 7% or less, even more preferably 6% or less, and particularly preferably 5.5% or less.

$P_2O_5$ may be contained to improve the ion exchange performance. When the content of $P_2O_5$ is small, the viscosity increases, and when the content of $P_2O_5$ is too large, the chemical resistance deteriorates. In the case where $P_2O_5$ is contained, the content thereof is preferably 0.2% or more, more preferably 0.5% or more, even more preferably 0.7% or more, still more preferably 1.0% or more, and particularly preferably 1.2% or more. The content of $P_2O_5$ is 15% or less, preferably 10% or less, more preferably 5% or less, still more preferably 3% or less, particularly preferably 2% or less, and most preferably 1.5% or less, in order to improve the chemical durability.

In the case where MgO is contained to improve the meltability of the glass, the content of MgO is preferably 0.1% or more, more preferably 0.3% or more, still more preferably 0.5% or more, particularly preferably 0.75% or more, and most preferably 1% or more. The content of MgO is 10% or less, preferably 8% or less, more preferably 5% or less, still more preferably 3% or less, particularly preferably 2% or less, and most preferably 15% or less, from the viewpoint of improving the ion exchange performance.

In the case where CaO is contained to improve the meltability of the glass, the content of CaO is preferably 0.2% or more, more preferably 0.5% or more, still more preferably 0.7% or more, and particularly preferably 1% or more. On the other hand, the content of CaO is 15% or less, preferably 5% or less, more preferably 2% or less, still more preferably 1.5% or less, and particularly preferably 1.2% or less, from the viewpoint of improving the ion exchange performance.

SrO, BaO or ZnO may be contained together with MgO and CaO or instead of MgO and CaO. In the case where SrO is contained, the content thereof is preferably 0.1% or more, and more preferably 0.2% or more. On the other hand, the content of SrO is preferably 3% or less, more preferably 2% or less, still more preferably 1.2% or less, even more preferably 1% or less, and particularly preferably 0.5% or less, in order to improve the ion exchange performance. That is, in the case where SrO is contained, the content of SrO is preferably 0.1% to 3%.

In the case where ZnO is contained, the content thereof is preferably 0.1% or more, and more preferably 0.2% or more. On the other hand, the content of ZnO is preferably 15% or less, more preferably 3% or less, still more preferably 1% or less, and particularly preferably 0.5% or less, in order to improve the ion exchange performance.

In the case where BaO is contained, the content thereof is preferably 0.1% or more, and more preferably 0.2% or more. On the other hand, the content of BaO is preferably 3% or less, more preferably 1% or less, and particularly preferably 0.5% or less, in order to improve the ion exchange performance. That is, in the case where BaO is contained, the content of BaO is preferably 0.1% to 3%.

Alkaline earth metal oxides such as MgO, CaO, SrO, BaO, and ZnO are all components for improving the meltability of the glass, but tend to decrease the ion exchange performance. The total content of MgO, CaO, SrO, BaO, and ZnO ([MgO]+[CaO]+[SrO]+[BaO]+[ZnO]) is preferably 0.5% to 15%. [MgO]+[CaO]+[SrO]+[BaO]+[ZnO] is preferably 15% or less, more preferably 10% or less, still more preferably 5% or less, particularly preferably 3% or less, and more particularly preferably 2.8% or less. In addition, the total content of MgO, CaO, SrO, BaO, and ZnO ([MgO]+[CaO]+[SrO]+[BaO]+[ZnO]) is preferably 0.5% or more, more preferably 1% or more, and particularly preferably 1.5% or more.

$Li_2O$ is a component that forms the surface compressive stress by ion exchange. When the content of $Li_2O$ is

small, the strengthening properties (NaCS to be described later) decrease too much and the viscosity increases too much. On the other hand, when the content of $Li_2O$ is too large, the strengthening properties (NaCS to be described later) increase too much. From such viewpoints, the content of $Li_2O$ is 3% or more, preferably 5% or more, more preferably 7% or more, still more preferably 7.5% or more, and particularly preferably 8% or more. In addition, the content of $Li_2O$ is 15% or less, preferably 12% or less, more preferably 10% or less, still more preferably 9% or less, and particularly preferably 8.5% or less.

$Na_2O$ is a component that forms a surface compressive stress layer by ion exchange using a molten salt containing potassium, and is also a component that improves the meltability of the glass. When the content of $Na_2O$ is small, the viscosity increases, and the strengthening properties (NaCS to be described later) increase too much. On the other hand, when the content of $Na_2O$ is too large, the strengthening properties (NaCS to be described later) decrease too much.

From such viewpoints, in the case where $Na_2O$ is contained, the content thereof is 2.5% or more, preferably 3% or more, more preferably 4% or more, still more preferably 5% or more, particularly preferably 6% or more, and most preferably 7% or more. The content of $Na_2O$ is 15% or less, preferably 12% or less, more preferably 10% or less, still more preferably 9% or less, particularly preferably 8.5% or less, and most preferably 8% or less.

$K_2O$ is a component that improves the meltability of the glass and is also a component that improves the processability of the glass. The present glass preferably contains $K_2O$. When the content of $K_2O$ is small, the viscosity increases, and the devitrification properties deteriorate. On the other hand, when the content of $K_2O$ is large, the charging properties deteriorate. In the case where $K_2O$ is contained, the content thereof is preferably 0.05% or more, more preferably 0.1% or more, still more preferably 0.15% or more, and particularly preferably 0.2% or more. In addition, the content of $K_2O$ is 5% or less, preferably 4% or less, more preferably 3% or less, still more preferably 2% or less, and particularly preferably 1.5% or less.

$ZrO_2$ is a component that increases the surface compressive stress by ion exchange, and may be contained. In the case where $ZnO_2$ is contained, the content thereof is preferably 0.005% or more, more preferably 0.2% or more, still more preferably 1% or more, particularly preferably 1.2% or more, and more particularly preferably 1.3% or more. The content of $ZrO_2$ is 5% or less, preferably 4% or less, more preferably 3% or less, still more preferably 2% or less, and particularly preferably 1.7% or less, from the viewpoint of preventing devitrification during melting.

$Y_2O_3$ is a component that prevents the crushing of the chemically strengthened glass and may be contained. In the case where these components are contained, the content thereof is preferably 0.05% or more, more preferably 0.1% or more, and still more preferably 0.15% or more.

The content of $Y_2O_3$ is 5% or less, preferably 3% or less, more preferably 1% or less, still more preferably 0.5% or less, and particularly preferably 0.2% or less, from the viewpoint of preventing the glass from devitrifying during melting and preventing the quality of the chemically strengthened glass from deteriorating.

$La_2O_3$ and $Nb_2O_5$ are components that prevent the crushing of the chemically strengthened glass and may be contained. In the case where these components are contained, contents thereof are each preferably 0.1% or more, and more preferably 0.2% or more. In the case where $La_2O_3$ and $Nb_2O_5$ are contained, the contents thereof are each preferably 3% or less, more preferably 1% or less, and still more preferably 0.3% or less, in order to prevent the glass from devitrifying during melting and to prevent the quality of the chemically strengthened glass from deteriorating.

$TiO_2$ is a component that prevents scattering of fragments when the chemically strengthened glass is broken, and may be contained. In the case where $TiO_2$ is contained, the content thereof is preferably 0.005% or more, more preferably 0.1% or more, still more preferably 0.15% or more, and particularly preferably 0.2% or more. The content of $TiO_2$ is preferably 5% or less, more preferably 2% or less, still more preferably 1% or less, and particularly preferably 0.5% or less, in order to prevent the devitrification during melting. Since $TiO_2$ may cause coloration, it is more preferable that $TiO_2$ is not substantially contained in order to improve the transparency of the glass.

A ratio of the content of $Li_2O$ to the total content of $Na_2O$ and $K_2O$ $[[Li_2O]/([Na_2O]+[K_2O])]$ is 0.5 or more, more preferably 0.7 or more, still more preferably 0.85 or more, even more preferably 0.95, even still more preferably 1.05 or more, further still more preferably 1.15 or more, and particularly preferably 1.25 or more, from the viewpoint of improving the strengthening properties (NaCS to be described later) and improving the charging properties. In addition, $[Li_2O]/([Na_2O]+[K_2O])$ is 3.5 or less, more preferably 3.0 or less, even more preferably 2.5 or less, still more preferably 2.0 or less, and particularly preferably 1.5 or less, from the viewpoint of preventing the strengthening properties (NaCS to be described later) from being too high and improving the devitrification properties.

A ratio of the content of $Li_2O$ to the total content of $Li_2O$, $Na_2O$; and $K_2O$ $[[Li_2O]/([Li_2O]+[Na_2O]+[K_2O])]$ is preferably 0.50 to 1.0. $[[Li_2O]/([Li_2O]+[Na_2O]+[K_2O])]$ is preferably 0.50 or more, more preferably 0.55 or more, and still more preferably 0.60 or more, from the viewpoint of improving the strengthening properties (NaCS to be described later) and improving the charging properties. In addition, $[[Li_2O]/([Li_2O]+[Na_2O]+[K_2O])]$ is preferably 1.0 or less, more preferably 0.75 or less, even more preferably 0.70 or less, and even more preferably 0.65 or less, from the viewpoint of preventing the strengthening properties (NaCS to be described later) from being too high and improving the devitrification properties.

The total content of $Al_2O_3$ and $Li_2O$ ($[Al_2O_3]+[Li_2O]$) is 27% or more, preferably 27.5% or more, more preferably 28.0% or more, still more preferably 28.5% or more, even more preferably 29.0% or more, and particularly preferably 29.5% or more, from the viewpoint of achieving both a low viscosity and excellent strengthening properties. In addition, $[Al_2O_3]+[Li_2O]$ is 35% or less, preferably 33% or less, more preferably 31% or less, still more preferably 30.5% or less, and particularly preferably 30% or less, from the viewpoint of preventing an increase in viscosity and preventing an excessive compressive stress from being applied to the glass during chemical strengthening.

A ratio $[[Li_2O]/([Al_2O_3]+[Li_2O])]$ of the content of $Li_2O$ to the total content of $Al_2O_3$ and $Li_2O$ ($[Al_2O_3]+[Li_2O]$) is preferably 0.20 to 0.45. $[Li_2O]/([Al_2O_3]+[Li_2O])$ is preferably 0.20 or more, more preferably 0.25 or more, and still more preferably 0.28 or more, from the viewpoint of achieving both a low viscosity and excellent strengthening properties. In addition, $[Li_2O]/([Al_2O_3]+[Li_2O])$ is preferably 0.45 or less, more preferably 0.40 or less, and still more preferably 0.35 or less, from the viewpoint of preventing a decrease in devitrification viscosity and preventing an excessive compressive stress from being applied to the glass during chemical strengthening.

An entropy function S value is a parameter related to chargeability and a dielectric loss. The present glass for strengthening has an entropy function S value determined using the following formula of preferably 0.25 or more, more preferably 0.28 or more, and still more preferably 0.30 or more. In addition, the entropy function S value is preferably 0.40 or less, more preferably 0.35 or less, still more preferably 0.33 or less, and particularly preferably 0.31 or less. When the entropy function S value is too large, the charging properties deteriorate, and when it is too small, the dielectric loss in a high frequency range increases.

$$S = -P_{Li} \times \log(P_{Li}) - P_{Na} \times \log(P_{Na}) - P_K \times \log(P_K)$$

Here,

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

$[Li_2O]$, $[Na_2O]$, and $[K_2O]$ represent the contents of $Li_2O$, $Na_2O$; and $K_2O$, respectively, expressed in mol% in terms of oxides.

The total content of $SiO_2$, $B_2O_3$, and $P_2O_5$ ($[SiO_2]+[B_2O_3]+[P_2O_5]$) is preferably 50% to 69%. $[SiO_2]+[B_2O_3]+[P_2O_5]$ is preferably 50% or more, more preferably 55% or more, still more preferably 58% or more, even more preferably 60% or more, and particularly preferably 61% or more, from the viewpoint of improving the devitrification properties. In addition, $[SiO_2]+[B_2O_3]+[P_2O_5]$ is preferably 69% or less, more preferably 65% or less, still more preferably 64% or less, particularly preferably 63% or less, and more particularly preferably 62% or less, from the viewpoint of improving the devitrification properties.

Alkali metal oxides such as $Na_2O$ and $K_2O$ (hereinafter, may be referred to as $R_2O$) are components that lower the melting temperature of the glass, and are preferably contained. The total content of $Na_2O$ and $K_2O$ ($[Na_2O]+[K_2O]$) is preferably 2.0% to 10%. From such viewpoints, $[Na_2O]+[K_2O]$ is preferably 2.0% or more, more preferably 2.5% or more, and still more preferably 3.0% or more. $[Na_2O]+[K_2O]$ is preferably 10% or less, more preferably 8% or less, and still more preferably 7% or less, from the viewpoint of maintaining the strength of the glass.

Alkali metal oxides such as $Li_2O$, $Na_2O$, and $K_2O$ (hereinafter, may be referred to as $R_2O$) are components that lower the melting temperature of the glass, and are preferably contained. The total content of $Li_2O$, $Na_2O$, and $K_2O$ ($[Li_2O]+[Na_2O]+[K_2O]$) is preferably 12% to 20%. From such viewpoints, $[Li_2O]+[Na_2O]+[K_2O]$ is preferably 12% or more, more preferably 14% or more, still more preferably 15.0% or more, particularly preferably 15.5% or more, and more particularly preferably 16.0% or more. $[Li_2O]+[Na_2O]+[K_2O]$ is preferably 20% or less, more preferably 18% or less, still more preferably 17% or less, and particularly preferably 16.5% or less, from the viewpoint of maintaining the strength of the glass.

The total content of $Al_2O_3$ and $B_2O_3$ ($[Al_2O_3]+[B_2O_3]$) is preferably 19% to 40%. $[Al_2O_3]+[B_2O_3]$ is preferably 19% or more, more preferably 22% or more, still more preferably 23% or more, and particularly preferably 24% or more, from the viewpoint of improving the fracture toughness. In addition, $[Al_2O_3]+[B_2O_3]$ is preferably 40% or less, more preferably 30% or less, still more preferably 27% or less, and particularly preferably 25% or less, from the viewpoint of improving the acid resistance. When the acid resistance is low, problems such as the difficulty of acid cleaning during glass processing occur.

The total content of $B_2O_3$ and $P_2O_5$ ($[B_2O_3]+[P_2O_5]$) is preferably 2% to 10%. $[B_2O_3]+[P_2O_5]$ is preferably 2% or more, more preferably 3% or more, still more preferably 4% or more, and particularly preferably 5% or more, from the viewpoint of reducing the viscosity while maintaining the devitrification properties. In addition, $[B_2O_3]+[P_2O_5]$ is preferably 10% or less, more preferably 8% or less, still more preferably 7% or less, and particularly preferably 6% or less, from the viewpoint of improving the acid resistance.

In the case where FeO is contained, a content thereof is preferably 200 ppm or less in mass% in terms of oxides. When the content is more than 200 ppm, coloration may occur and the color tone of a display may change.

As a refining agent, trace amounts (preferably 1 mass% or less) of Cl, Sn and S may be contained.

From the viewpoint of improving the chemical resistance, at least one selected from the group consisting of $Sc_2O_3$, $Ga_2O_3$, $GeO_2$, $Nb_2O_5$, $In_2O_3$, $TeO_2$, $HfO_2$, $Ta_2O_5$, $WO_3$, $Bi_2O_3$, $La_2O_3$, $Gd_2O_3$, $Yb_2O_{3Zn}$, and $Lu_2O_3$ may be contained in the total content of preferably 0.01 mass% to 1.0 mass%.

A β-OH value has a relationship with the viscosity and bubbles of the glass. The β-OH value is preferably 0.05 to 0.5. When the β-OH value is too small, it is difficult to obtain the effect of reducing the viscosity, and when the β-OH value is too large, bubbles may be generated due to decomposition and the bubble quality of the glass may be poor.

$Ta_2O_5$ and $Gd_2O_3$ may be contained in small amounts to prevent the crushing of the chemically strengthened glass, but since the refractive index or the reflectance increases, each is preferably 1% or less, and more preferably 0.5% or less, and it is still more preferable that these elements are substantially not contained.

In the case of coloring the glass, a coloring component may be added within a range that does not impede achievement of desired chemical strengthening properties. Examples of the coloring component include $Co_3O_4$, $MnO_2$, $Fe_2O_3$, NiO, CuO, $Cr_2O_3$, $V_2O_5$, $Bi_2O_3$, $SeO_2$, $CeO_2$, $Er_2O_3$, and $Nd_2O_3$. These may be used alone or in combination

The total content of the coloring components is preferably 5% or less, more preferably 3% or less, and still more preferably 1% or less, from the viewpoint of preventing the devitrification of the glass. In the case where it is desired to increase a visible light transmittance of the glass, it is preferable that these components are substantially not contained.

In addition, $SO_3$, a chloride, a fluoride, and the like may be appropriately contained as a refining agent during melting of the glass. $As_2O_3$ is preferably not substantially contained. In the case where $Sb_2O_3$ is contained, the content thereof is preferably 0.3 mass% or less, and more preferably 0.1 mass% or less, and it is most preferably that $Sb_2O_3$ is substantially not contained.

(Properties)

The present glass for strengthening preferably satisfies the following (A1) to (A4).

(A1) the Young's modulus is 80 GPa to 100 GPa.
(A2) in the case of a sheet shape having a thickness of 0.7 mm, when ion exchange is performed using 100 mass% sodium nitrate at 380°C for 4 hours, the surface compressive stress $CS_0$ is 200 MPa to 450 MPa and the compressive stress layer depth is 70 μm to 120 μm.
(A3) a temperature ($T_2$) at which the viscosity is $10^2$ dPa·s is 1650°C or lower, and a temperature at which the viscosity is $10^4$ dPa·s is 1250°C or lower. (A4) a fracture toughness value $K_{IC}$ is 0.75 MPa·m$^{1/2}$ to 0.85 MPa·m$^{1/2}$.

Hereinafter, each item will be described.

The larger the Young's modulus, the higher the fracture toughness and the larger the CT limit. From such viewpoints, the Young's modulus of the present glass for strengthening is preferably 77 GPa or more, more preferably 80 GPa or more, and still more preferably 85 GPa or more. On the other hand, when the Young's modulus is too large, the diffusion of ions during chemical strengthening tends to be slow, making it difficult to obtain a large DOC. Therefore, the Young's modulus is preferably 100 GPa or less, more preferably 95 GPa or less, and still more preferably 90 GPa or less. The Young's modulus can be measured, for example, by using an ultrasonic pulse method.

In the case where the present glass for strengthening has a sheet shape having a thickness of 0.7 mm, when ion exchange is performed using 100 mass% sodium nitrate at 380°C for 4 hours, the surface compressive stress (hereinafter, also abbreviated as NaCS) is preferably 200 MPa to 450 MPa, and the compressive stress layer depth (hereinafter also abbreviated as NaDOL) is preferably 70 μm to 120 μm.

The NaCS is preferably 200 MPa or more, more preferably 250 MPa or more, still more preferably 300 MPa or more, and particularly preferably 350 MPa or more. When the NaCS is 250 MPa or more, a sufficient compressive stress can be applied to a deep region having a depth of 50 μm or more. In addition, the NaCS is preferably 450 MPa or less, more preferably 425 MPa or less, still more preferably 400 MPa or less, and particularly preferably 375 MPa or less. When the NaCS is more than 450 MPa, in designing a stress profile, the DOC must be small due to the constraint of the CT limit, and as a result, the compressive stress ($CS_{50}$ or $CS_{90}$) in a deep region having a depth of 50 μm or more is smaller.

The NaDOL is preferably 70 μm or more, more preferably 80 μm or more, still more preferably 90 μm or more, and particularly preferably 100 μm or more. When the NaDOL is 70 μm or more, the chemical strengthening can be performed in a short time, so that the process efficiency is improved. The NaDOL is preferably 150 μm or less, more preferably 140 μm

or less, still more preferably 130 $\mu$m or less, and particularly preferably 120 $\mu$m or less. When the NaDOL is 150 $\mu$m or less, a sufficient chemical strengthening time for stably controlling the chemical strengthening process can be ensured. When the chemical strengthening time is too short, the influence of ion diffusion during preheating before and after immersion in a strengthening salt and during the step of removing the molten strengthening salt is relatively larger, resulting in a large variation in mass-produced strengthening stress profiles.

The present glass for strengthening has a temperature ($T_2$) at which a viscosity log $\eta$ is 2 (poise) of preferably 1650°C or lower, more preferably 1615°C or lower, and still more preferably 1590°C or lower, from the viewpoint of reducing the viscosity and improving the productivity, and from the viewpoint of the SDGs. The $T_2$ is generally 1400°C or higher. The temperature ($T_2$) at which the viscosity log $\eta$ is 2 (poise) is synonymous with the temperature ($T_2$) at which the viscosity is $10^2$ dPa·s.

The present glass for strengthening has a temperature ($T_4$) at which a viscosity log $\eta$ is 4 (poise) of preferably 1250°C or lower, more preferably 1220°C or lower, and still more preferably 1200°C or lower, from the viewpoint of reducing the viscosity and improving the productivity, and from the viewpoint of the SDGs. The $T_4$ is generally 1000°C or higher The temperature at which the viscosity log $\eta$ is 4 (poise) is synonymous with the temperature ($T_4$) at which the viscosity is $10^4$ dPa·s

The present glass for strengthening has a fracture toughness value ($K_{Ic}$) of preferably 0.75 MPa·m$^{1/2}$ or more, more preferably 0.77 MPa·m$^{1/2}$ or more, still more preferably 0.80 MPa·m$^{1/2}$ or more, and particularly preferably 0.82 MPa·m$^{1/2}$ or more. When the fracture toughness value ($K_{Ic}$) is 0.75 MPa·m$^{1/2}$ or more, the number of fragments when the glass is broken can be effectively reduced. In addition, when the $K_{Ic}$ increases, the Young's modulus increases and the strength against bending tends to decrease. The $K_{Ic}$ is preferably 0.85 MPa·m$^{1/2}$ or less, more preferably 0.84 MPa·m$^{1/2}$ or less, and still more preferably 0.83 MPa·m$^{1/2}$ or less, from the viewpoint of ensuring sufficient bending strength.

Note that, in the present description, the fracture toughness value ($K_{Ic}$) is a fracture toughness value determined by measuring a $K_I$-v curve by using the DCDC method to be described in detail in Examples below.

The present glass for strengthening preferably has a glass transition temperature (Tg) of 480°C or higher, in order to prevent stress relaxation during chemical strengthening. The Tg is more preferably 500°C or higher, and still more preferably 520°C or higher, in order to prevent stress relaxation and obtain a large compressive stress.

In addition, the Tg is preferably 700°C or lower, in order to increase the ion diffusion rate during chemical strengthening. The Tg is more preferably 650°C or lower, and still more preferably 600°C or lower, in order to make it easier to obtain a large DOC.

The glass transition point Tg is determined based on JIS R1618:2002 by obtaining a thermal expansion curve at a temperature rising rate of 10°C/min using a thermal dilatometer (TD5000SA manufactured by Bruker AXS), and measuring the glass transition point Tg (unit: °C) from the obtained thermal expansion curve.

From the viewpoint of preventing crystal precipitation during bending molding, the present glass for strengthening preferably has a crystallization peak temperature of a glass for chemical strengthening higher than the softening point of the glass, as measured by the following measurement method. From such viewpoints, a value (DSC peak temperature - Tg) obtained by subtracting the Tg from the crystallization peak temperature (hereinafter, also abbreviated as a DSC peak temperature) is preferably 180°C or higher, more preferably 220°C or higher, and still more preferably 250°C or higher. In addition, it is more preferable that no crystallization peak is observed.

(Measurement Method)

About 70 mg of glass is crushed, ground in an agate mortar, and measured using a differential scanning calorimeter (DSC) from room temperature to 1000°C at a temperature rising rate of 10°C/min.

The present glass for strengthening has a specific gravity of preferably 2.35 or more, more preferably 2.38 or more, and still more preferably 2.40 or more, from the viewpoint of improving the productivity. In addition, the specific gravity is preferably 2.45 or less, more preferably 2.43 or less, and still more preferably 2.41 or less. The specific gravity is measured by using the Archimedes method.

The shape of the present glass for strengthening is not particularly limited, and may be a curved surface shape. The curved surface shape may be a shape having a rounded portion on one surface and a flat surface opposite to the rounded surface (sometimes called a 2.5D shape), or a 3D shape having a rounded shape. In the present description, the "2.5D shape" refers to a shape having rounded corners at corners of a flat sheet (2D). In the present description, the "3D shape" refers to a glass having a curved shape, not a flat (2D) shape.

The present glass for strengthening has a thickness of generally preferably 1.5 mm or less, more preferably 1.2 mm or less, still more preferably 1.1 mm or less, particularly preferably 1.0 mm or less, and most preferably 0.8 mm or less, from the viewpoint of effectively performing a chemical strengthening treatment and from the viewpoint of a weight when the glass is used as a cover glass. In addition, the thickness is preferably 0.4 mm or more, more preferably 0.45 mm or more, still more preferably 0.50 mm or more, and particularly preferably 0.55 mm or more, from the viewpoint of the strength.

(Production Method)

The present glass for strengthening can be produced by a general method. For example, raw materials of components of the glass are blended, and then heated and melted in a glass melting furnace. Thereafter, the glass is homogenized by a known method and molded into a desired shape such as a glass sheet, followed by annealing.

Examples of a molding method for a glass sheet include a float method, a press method, a fusion method, and a down-draw method. Particularly, a float method suitable for mass production is preferred. As a continuous molding method other than the float method, that is, a fusion method and a down-draw method are also preferred.

Thereafter, the molded glass is ground and polished as necessary to form a glass substrate. Note that, in the case of cutting the glass substrate into a predetermined shape and size or chamfering the glass substrate, it is preferable to perform cutting or chamfering of the glass substrate before a chemical strengthening treatment to be described later is performed since a compressive stress layer is also formed on an end surface by the subsequent chemical strengthening treatment.

(Third Aspect)

<$Li_2O$-$Al_2O_3$-$SiO_2$-based Glass for Chemical Strengthening>

A $Li_2O$-$Al_2O_3$-$SiO_2$-based glass for chemical strengthening according to a third aspect (hereinafter, may be referred to as the present $Li_2O$-$Al_2O_3$-$SiO_2$-based glass for chemical strengthening) contains 2% or more of $B_2O_3$ in mol% in terms of oxides, in which a Young's modulus is more than 76 GPa, a surface compressive stress $CS_0$ is 200 MPa to 450 MPa and a compressive stress layer depth DOC is 70 $\mu$m to 120 $\mu$m when chemical strengthening is performed using 100 mass% sodium nitrate at 380°C for 4 hours, and a temperature ($T_2$) at which a viscosity is $10^2$ dPa·s is 1650°C or lower.

In the present $Li_2O$-$Al_2O_3$-$SiO_2$-based glass for chemical strengthening, the content of $B_2O_3$ is 2% or more, preferably 3% or more, more preferably 4% or more, still more preferably 5% or more, and particularly preferably 6% or more, from the viewpoint of improving the scratch resistance. $B_2O_3$ is a component that facilitates stress relaxation after chemical strengthening, and is thus preferably 10% or less, more preferably 9% or less, still more preferably 8% or less, and particularly preferably 7% or less, from the viewpoint of preventing a decrease in surface compressive stress due to stress relaxation.

In the present $Li_2O$-$Al_2O_3$-$SiO_2$-based glass for chemical strengthening, the Young's modulus is more than 76 GPa, preferably 77 GPa or more, more preferably 80 GPa or more, and still more preferably 85 GPa or more. On the other hand, when the Young's modulus is too large, the diffusion of ions during chemical strengthening tends to be slow, making it difficult to obtain a large DOC. Therefore, the Young's modulus is preferably 100 GPa or less, more preferably 95 GPa or less, and still more preferably 90 GPa or less.

In the present $Li_2O$-$Al_2O_3$-$SiO_2$-based glass for chemical strengthening, the NaCS is 200 MPa or more, preferably 250 MPa or more, more preferably 300 MPa or more, and particularly preferably 350 MPa or more. When the NaCS is 200 MPa or more, a sufficient compressive stress can be applied to a deep region having a depth of 50 $\mu$m or more. In addition, the NaCS is 450 MPa or less, preferably 400 MPa or less, more preferably 350 MPa or less, and particularly preferably 300 MPa or less. When the NaCS is more than 450 MPa, in designing a stress profile, the DOC must be small due to the constraint of the CT limit, and as a result, the compressive stress in a deep region having a depth of 50 $\mu$m or more is smaller.

In the present $Li_2O$-$Al_2O_3$-$SiO_2$-based glass for chemical strengthening, the NaDOL is 70 $\mu$m or more, preferably 80 $\mu$m or more, more preferably 90 $\mu$m or more, and particularly preferably 100 $\mu$m or more. When the NaDOL is 70 $\mu$m or more, the chemical strengthening can be performed in a short time, and the process cost is reduced. The NaDOL is 120 $\mu$m or less, preferably 110 $\mu$m or less, more preferably 100 $\mu$m or less, and particularly preferably 90 $\mu$m or less. When the NaDOL is 120 $\mu$m or less, a sufficient chemical strengthening time for stably managing the chemical strengthening process can be ensured.

In the present $Li_2O$-$Al_2O_3$-$SiO_2$-based glass for chemical strengthening, the temperature ($T_2$) at which the viscosity is $10^2$ dPa·s is 1650°C or lower, preferably 1615°C or lower, and more preferably 1590°C or lower, from the viewpoint of improving the productivity. The $T_2$ is generally 1400°C or higher.

In the present $Li_2O$-$Al_2O_3$-$SiO_2$-based glass for chemical strengthening, as for the composition and properties other than those described above and the production method thereof, those described above in the (Composition), (Properties), and (Production Method) of the present glass for chemical strengthening can be appropriately applied.

(Second Aspect)

<Glass>

A glass according to a second aspect contains, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 27% to 35%, and
an entropy function S value of an alkali ion represented by the following formula is 0.25 to 0.40.

$$S = -P_{Li} \times \log(P_{Li}) - P_{Na} \times \log(P_{Na}) - P_K \times \log(P_K) \quad P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

In the formulas, [ ] indicates a content of each component described in the parentheses, in mol% in terms of oxides. A base of log is 10.

The glass according to the second aspect has an entropy function S value determined using the following formula of 0.25 or more, preferably 0.28 or more, and more preferably 0.30 or more. In addition, the entropy function S value is 0.40 or less, preferably 0.35 or less, more preferably 0.33 or less, and particularly preferably 0.31 or less, from the viewpoint of preventing an excessive compressive stress from being applied to the glass during chemical strengthening.

$$S = -P_{Li} \times \log(P_{Li}) - P_{Na} \times \log(P_{Na}) - P_K \times \log(P_K) \text{ Here, } P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

$[Li_2O]$, $[Na_2O]$, and $[K_2O]$ represent the contents of $Li_2O$, $Na_2O$, and $K_2O$, respectively, expressed in mol% in terms of oxides. When the entropy function S value is too large, the charging properties deteriorate, and when it is too small, the dielectric loss in a high frequency range increases.

The glass according to the second aspect satisfying the above composition is likely to form a preferred stress profile by a chemical strengthening treatment, does not exceed a CT limit, and can ensure drop strength, and is thus preferably used as a glass for chemical strengthening. The present glass is, for example, strengthened by an ion exchange method.

In the glass according to the second aspect, as for the composition and properties other than those described above and the production method, those described above in the (Composition), (Properties), and (Production Method) of the glass for chemical strengthening in the first aspect can be appropriately used.

(Fourth Aspect)

<Glass for Chemical Strengthening>

A glass for chemical strengthening according to a fourth aspect contains, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 22% to 35%, and
a Young's modulus is 77 GPa or more.

In the formulas, [ ] indicates a content of each component described in the parentheses, in mol% in terms of oxides.

In the glass for chemical strengthening according to the fourth aspect, the content of $SiO_2$ is 50% or more, preferably 52% or more, more preferably 54% or more, still more preferably 55% or more, and particularly preferably 56% or more, in order to improve the chemical durability. The content of $SiO_2$ is 67% or less, preferably 66% or less, more preferably 65% or less, still more preferably 62% or less, even more preferably 60% or less, particularly preferably 59% or less, and most preferably 58% or less, in order to improve the meltability of the glass.

In the glass for chemical strengthening according to the fourth aspect, $Al_2O_3$ is 16% or more, preferably 17% or more, more preferably 19% or more, still more preferably 20% or more, and particularly preferably 20.5% or more, in order to improve the ion exchangeability during chemical strengthening and increase the surface compressive stress after strengthening, or to increase the glass transition temperature (Tg) and the Young's modulus. The content of $Al_2O_3$ is 25% or less, preferably 23% or less, more preferably 22% or less, and still more preferably 21.5% or less.

In the glass for chemical strengthening according to the fourth aspect, the total content of $Al_2O_3$ and $Li_2O$ ($[Al_2O_3]$ $+[Li_2O]$) is 22% or more, preferably 22.5% or more, more preferably 23% or more, still more preferably 23.5% or more, even more preferably 24% or more, even still more preferably 25% or more, further still more preferably 27% or more, and particularly preferably 29% or more, from the viewpoint of achieving both a low viscosity and excellent strengthening properties. In addition, $[Al_2O_3]+[Li_2O]$ is 35% or less, preferably 33% or less, more preferably 31% or less, still more preferably 30.5% or less, and particularly preferably 30% or less, from the viewpoint of preventing an increase in viscosity and preventing an excessive compressive stress from being applied to the glass during chemical strengthening.

In the glass for chemical strengthening according to the fourth aspect, the Young's modulus is 77 GPa or more, preferably 78 GPa or more, and more preferably 80 GPa or more, from the viewpoint of improving the fracture toughness and increasing the CT limit. In addition, the Young's modulus is preferably 100 GPa or less, more preferably 95 GPa or less, and still more preferably 90 GPa or less.

In the glass for chemical strengthening according to the fourth aspect, as for the composition and properties other than those described above and the production method, those described above in the (Composition), (Properties), and (Production Method) of the glass for chemical strengthening in the first aspect can be appropriately used.

(Fifth Aspect)

<Glass>

A glass according to a fifth aspect contains, in mol% in terms of oxides:

50% to 67% of $SiO_2$;
16% to 25% of $Al_2O_3$;
2% to 10% of $B_2O_3$;
0% to 15% of $P_2O_5$;

0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 22% to 35%,
a Young's modulus is 77 GPa or more, and
an entropy function S value of an alkali ion represented by the following formula is 0.25 to 0.40.

$$S = -P_{Li} \times log(P_{Li}) - P_{Na} \times log(P_{Na}) - P_K \times log(P_K) \quad P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

In the formulas, [ ] indicates a content of each component described in the parentheses, in mol% in terms of oxides. A base of log is 10.

In the glass according to the fifth aspect, the content of $SiO_2$ is 50% or more, preferably 52% or more, more preferably 54% or more, still more preferably 55% or more, and particularly preferably 56% or more, in order to improve the chemical durability. The content of $SiO_2$ is 67% or less, preferably 66% or less, more preferably 65% or less, still more preferably 62% or less, even more preferably 60% or less, particularly preferably 59% or less, and most preferably 58% or less, in order to improve the meltability of the glass.

In the glass according to the fifth aspect, $Al_2O_3$ is 16% or more, preferably 17% or more, more preferably 19% or more, still more preferably 20% or more, and particularly preferably 20.5% or more, in order to improve the ion exchangeability during chemical strengthening and increase the surface compressive stress after strengthening, or to increase the glass transition temperature (Tg) and the Young's modulus. The content of $Al_2O_3$ is 25% or less, preferably 23% or less, more preferably 22% or less, and still more preferably 21.5% or less.

In the glass according to the fifth aspect, the total content of $Al_2O_3$ and $Li_2O$ ($[Al_2O_3]+[Li_2O]$) is 22% or more, preferably 22.5% or more, more preferably 23% or more, still more preferably 23.5% or more, even more preferably 24% or more, even still more preferably 25% or more, further still more preferably 27% or more, and particularly preferably 29% or more, from the viewpoint of achieving both a low viscosity and excellent strengthening properties. In addition, $[Al_2O_3]+[Li_2O]$ is 35% or less, preferably 33% or less, more preferably 31% or less, still more preferably 30.5% or less, and particularly preferably 30% or less, from the viewpoint of preventing an increase in viscosity and preventing an excessive compressive stress from being applied to the glass during chemical strengthening.

In the glass according to the fifth aspect, the Young's modulus is 77 GPa or more, preferably 78 GPa or more, and more preferably 80 GPa or more, from the viewpoint of improving the fracture toughness and increasing the CT limit. In addition, the Young's modulus is preferably 100 GPa or less, more preferably 95 GPa or less, and still more preferably 90 GPa or less.

In the glass according to the fifth aspect, as for the composition and properties other than those described above and the production method, those described above in the (Composition), (Properties), and (Production Method) of the glass for chemical strengthening in the first aspect can be appropriately used.

(Sixth Aspect)

<Chemically Strengthened Glass>

A chemically strengthened glass according to the present invention (hereinafter, may be referred to as the present chemically strengthened glass) can be produced by chemically strengthening the above glass for chemical strengthening, $Li_2O$-$Al_2O_3$-$SiO_2$-based glass for chemical strengthening, or glass to form a compressive stress layer.

(Stress Properties)

The present chemically strengthened glass preferably has the following stress properties (C1) to (C6).

(C1) a surface compressive stress $CS_0$ is 500 MPa or more.
(C2) when a sheet thickness is t ($\mu$m) and a compressive stress layer depth is DOC ($\mu$m), DOC/t is 0.125 to 0.225.
(C3) in a stress profile in which a vertical axis is a compressive stress (MPa) and a horizontal axis is a depth ($\mu$m) from a surface, an average slope at a depth of 1 $\mu$m to 3 $\mu$m from the surface is more than -400 and less than -100.
(C4) in the stress profile in which the vertical axis is the compressive stress (MPa) and the horizontal axis is the depth ($\mu$m) from the surface, an average slope in a region from a depth of 20 $\mu$m from the surface to a compressive stress layer depth DOC/2 $\mu$m is more than -4 and less than -1.5.
(C5) when the sheet thickness is t ($\mu$m), a compressive stress value $CS_{50}$ at a depth of 50 $\mu$m from the surface is 0.1t (MPa) or more.
(C6) when the thickness is t ($\mu$m), a compressive stress value $CS_{90}$ at a depth of 90 $\mu$m from the surface is 0.03t (MPa) or more.

Hereinafter, each item will be described.
The surface compressive stress $CS_0$ of the present chemically strengthened glass is preferably 500 MPa or more, more preferably 550 MPa or more, still more preferably 650 MPa or more, and particularly preferably 750 MPa or more, from the viewpoint of preventing cracks due to deformation such as bending. The strength increases as the $CS_0$ increases, but when the $CS_0$ is too large, severe crushing may occur during cracking, and thus it is preferably 1400 MPa or less, and more preferably 1200 MPa or less.
When the sheet thickness is t ($\mu$m) and the compressive stress layer depth is DOC ($\mu$m), the DOC/t of the present chemically strengthened glass is preferably 0.125 or more, more preferably 0.14 or more, and still more preferably 0.16 or more, from the viewpoint of preventing cracking even when scratches are generated on the surface. In addition, since the tensile stress is generated inside in response to the compressive stress formed near the surface, the DOC/t is preferably 0.225 or less, more preferably 0.20 or less, and still mort preferably 0.18 or less, from the viewpoint of preventing scattering of fragments when the chemically strengthened glass is broken.
In the stress profile in which the vertical axis is the compressive stress (MPa) and the horizontal axis is the depth ($\mu$m) from the surface, the average slope at a depth of 1 $\mu$m to 3 $\mu$m from the surface of the present chemically strengthened glass is preferably more than -400, more preferably -300 or more, and still more preferably -200 or more. When the average slope at a depth of 1 $\mu$m to 3 $\mu$m from the surface is more than -400, a sufficiently large surface layer CS can be ensured. The average slope at a depth of 1 $\mu$m to 3 $\mu$m from the surface is preferably less than -100, more preferably -150 or less, and still more preferably -200 or less. When the average slope at a depth of 1 $\mu$m to 3 $\mu$m from the surface is less than -100, it is possible to prevent a decrease in bending strength caused by shallow scratches that are generated in glass processing. In the present description, the "average slope" refers to the average obtained by determining the slope of the stress profile every 1 $\mu$m in a depth range in which the slope is to be determined.
In the stress profile in which the vertical axis is the compressive stress (MPa) and the horizontal axis is the depth ($\mu$m) from the surface, the average slope in the region from a depth of 20 $\mu$m from the surface to the compressive stress layer depth DOC/2 $\mu$m of the present chemically strengthened glass is preferably more than -4, more preferably -3.5 or more, and still more preferably -3.0 or more. When the average slope is more than -4, a large $CS_{50}$ can be achieved, but when the average slope is less than -4, a large $CS_{90}$ is difficult to achieve. In addition, the average slope is preferably less than -1.5, more preferably -2.0 or less, and still more preferably -2.5 or less. When the average slope is less than -1.5, a large $CS_{90}$ can be achieved, but when the average slope is more than -1.5, a large $CS_{50}$ is difficult to achieve.
When the sheet thickness is t ($\mu$m), the compressive stress value $CS_{50}$ at a depth of 50 $\mu$m from the surface of the present chemically strengthened glass is preferably 0.1t (MPa) or more, more preferably 0.13t (MPa) or more, still more preferably 0.15t (MPa) or more, and particularly preferably 0.17t (MPa) or more. When the $CS_{50}$ is 0.1t (MPa) or more, the present chemically strengthened glass is more likely to be prevented from cracking when a mobile terminal or the like including the present chemically strengthened glass as a cover glass is dropped. The strength increases as the $CS_{50}$ increases, but when the $CS_{50}$ is too large, severe crushing may occur during cracking, and thus it is preferably 0.3t (MPa) or less, and more preferably 0.25t (MPa) or less.
When the sheet thickness is t ($\mu$m), the compressive stress value $CS_{90}$ at a depth of 90 $\mu$m from the surface of the present chemically strengthened glass is preferably 0.03t (MPa) or more, more preferably 0.04t (MPa) or more, still more preferably 0.05t (MPa) or more, and particularly preferably 0.07t (MPa) or more. When the $CS_{90}$ is 0.03t (MPa) or more, the present chemically strengthened glass is more likely to be prevented from cracking when a mobile terminal or the like including the present chemically strengthened glass as a cover glass is dropped on coarse sand and the like. The strength increases as the $CS_{90}$ increases, but when the $CS_{90}$ is too large, severe crushing may occur during cracking, and thus it is preferably 0.15t (MPa) or less, more preferably 0.14t (MPa) or less, still more preferably 0.13t (MPa) or less, and particularly preferably 0.10t (MPa) or less.

(Chemical Strengthening Treatment)

The chemical strengthening treatment is a treatment in which a glass is brought into contact with a metal salt by a method of immersing a glass into a melt of a metal salt (for example, potassium nitrate) containing metal ions having a large ion radius (typically, Na ions or K ions), and thereby metal ions having a small ion radius (typically, Na ions or Li ions) in the glass are substituted with the metal ions having a large ion radius (typically, Na ions or K ions for Li ions, and K ions for Na ions).

In order to increase the rate of the chemical strengthening treatment, it is preferable to use "Li-Na exchange" in which Li ions in the glass are exchanged with Na ions. In addition, in order to form a large compressive stress by ion exchange, it is preferable to use "Na-K exchange" in which Na ions in the glass are exchanged with K ions.

Examples of the molten salt for performing the chemical strengthening treatment include a nitrate, a sulfate, a carbonate, and a chloride. Among them, examples of the nitrate include lithium nitrate, sodium nitrate, potassium nitrate, cesium nitrate, and silver nitrate. Examples of the sulfate include lithium sulfate, sodium sulfate, potassium sulfate, cesium sulfate, and silver sulfate. Examples of the carbonate include lithium carbonate, sodium carbonate, and potassium carbonate. Examples of the chloride include lithium chloride, sodium chloride, potassium chloride, cesium chloride, and silver chloride. These molten salts may be used alone or in combination of plural types thereof.

As treatment conditions of the chemical strengthening treatment, a time, a temperature, and the like can be selected in consideration of a glass composition, a type of the molten salt, and the like. For example, the glass for chemical strengthening is subjected to a chemical strengthening treatment at preferably 450°C or lower for preferably 1 hour or shorter. Specifically, for example, a treatment of immersion in a molten salt (for example, a mixed salt of lithium nitrate and sodium nitrate) containing 0.3 mass% of Li and 99.7 mass% of Na at preferably 450°C for preferably about 0.5 hours is exemplified.

The chemical strengthening treatment may be performed by two or more stages of ion exchange. The two-stage ion exchange is specifically performed, for example, as follows. First, the glass for chemical strengthening is immersed in a metal salt (for example, sodium nitrate) containing Na ions at preferably about 350°C to 500°C for preferably about 0.1 hours to 10 hours. This causes ion exchange between Li ions in the glass for chemical strengthening and Na ions in the metal salt, thereby forming a relatively deep compressive stress layer.

When a compressive stress layer is formed on a surface portion of a glass article by the chemical strengthening treatment, a tensile stress is necessarily generated in a center portion of the glass article according to a total surface compressive stress. When the tensile stress value is too large, the glass article cracks severely and is scattered into fragments when broken. When the CT is larger than a threshold value (hereinafter, also abbreviated as a CT limit), the number of fragments during damage explosively increases. In the case of performing two or more stages of ion exchange, a maximum tensile stress value of a stress profile formed inside the glass by initial ion exchange (first ion exchange) is preferably larger than the CT limit. When the maximum tensile stress value after the first ion exchange is larger than the CT limit, the compressive stress is more sufficiently introduced by the first ion exchange, and in the subsequent second ion exchange step, a large $CS_{50}$ and $CS_{90}$ can be kept even after the stress value of the glass surface layer is reduced.

Next, the glass for chemical strengthening is immersed in a metal salt (for example, potassium nitrate) containing K ions at preferably about 350°C to 500°C for preferably about 0.1 hours to 10 hours. Accordingly, a large compressive stress is generated in a portion of the compressive stress layer formed in the previous treatment, for example, within a depth of about 10 $\mu$m. According to such a two-stage treatment, a stress profile having a large surface compressive stress value is easily obtained.

An ion profile and stress properties of the present chemically strengthened glass can be adjusted by adjusting a base composition of the present chemically strengthened glass and conditions in the chemical strengthening treatment. Here, the "base composition of the chemically strengthened glass" refers to a composition of the glass before chemical strengthening. The composition of the present chemically strengthened glass is similar to the composition of the glass before strengthening as a whole except for the case where an extreme ion exchange treatment is performed, and generally, the composition of the glass before strengthening is equivalent to the composition of the chemically strengthened glass at the sheet thickness center. Particularly, the composition of the deepest portion from the glass surface is the same as the composition of the glass before strengthening, except for the case where an extreme ion exchange treatment is performed.

(Application of Chemically Strengthened Glass)

The chemically strengthened glass according to the present invention is particularly useful as a cover glass for use in an electronic device such as a mobile device such as a mobile phone or a smartphone. Further, the chemically strengthened glass is also useful for a cover glass of an electronic device such as a television, a personal computer, and a touch panel, an elevator wall surface, or a wall surface (full-screen display) of a construction such as a house and a building, which is not intended to be carried. In addition, the chemically strengthened glass is also useful as a building material such as a window glass, a table top, an interior of an automobile, an airplane, or the like, and a cover glass thereof, or useful for a casing having a curved surface shape.

(Application of Glass)

The glass according to the present invention is particularly useful as a cover glass for use in an electronic device such as a mobile device such as a mobile phone or a smartphone. Further, the glass is also useful for a cover glass of an electronic device such as a television, a personal computer, and a touch panel, an elevator wall surface, or a wall surface (full-screen display) of a construction such as a house and a building, which is not intended to be carried. In addition, the glass is also useful as a building material such as a window glass, a table top, an interior of an automobile, an airplane, or the like, and a cover glass thereof, or useful for a casing having a curved surface shape.

Examples

Hereinafter, the present invention will be described with reference to Examples, but the present invention is not limited thereto.

(Preparation of Glass for Chemical Strengthening)

For each glass for chemical strengthening in Examples 1 to 16 shown in Tables 1 and 2, generally used glass raw materials such as oxides, hydroxides, carbonates, or nitrates were appropriately selected so as to obtain the glass compositions shown in the tables in mole percentages in terms of oxides, charged into a platinum crucible, and melted by heating to a high temperature of 1650°C or higher in an electric furnace, and thereafter, the glass melt was poured onto a carbon mold and kept at Tg+50°C for 30 minutes, and then cooled at a rate of 0.5°C/min to obtain a glass block. The obtained glass block was cut, ground and polished to obtain a glass sheet having a length of 25 mm, a width of 25 mm, and a thickness of 0.7 mm.

(Preparation of Chemically Strengthened Glass)

Subsequently, each glass for chemical strengthening in Examples 1 to 14 was subjected to a chemical strengthening treatment under a condition A (100 mass% sodium nitrate at 380°C for 4 hours) to obtain a chemically strengthened glass.
The glass in Example 5 was subjected to two-stage chemical strengthening under the following condition B, to obtain a chemically strengthened glass. (Condition B) First stage: 100 mass% sodium nitrate at 380°C for 100 minutes. Second stage: 100 mass% potassium nitrate at 380°C for 60 minutes.
The properties of the obtained glass for chemical strengthening and chemically strengthened glass were evaluated by the following procedures.

[Specific Gravity]

The specific gravity was measured by using the Archimedes method.

[Young's Modulus]

The Young's modulus was measured by using the ultrasonic pulse method (JIS R1602, 1995).

[Stress Profile]

The stress value was measured using an optical waveguide surface stress meter FSM-6000 and a scattered light photoelastic stress measuring instrument SLP2000 manufactured by Orihara Industrial Co., Ltd. The $CS_0$ in the two-stage strengthening stress profile is a value measured using an optical waveguide surface stress meter FSM-6000, and in the one-stage strengthening stress profile, the NaCS ($CS_0$ after a chemical strengthening treatment using 100 mass% sodium nitrate at 380°C for 4 hours) is a value measured using a scattered light photoelastic stress measuring instrument SLP2000, and the NaDOL (DOC after a chemical strengthening treatment using 100 mass% sodium nitrate at 380°C for 4 hours), the $CS_{50}$, and the $CS_{90}$ are values measured using a scattered light photoelastic stress measuring instrument SLP2000.

[$T_2$ and $T_4$]

The $T_2$ and the $T_4$ were each determined according to a method defined in ASTM C965-96 (2017), by measuring the viscosity using a rotary viscometer, and determining the temperature at which the viscosity was $10^2$ dPa·s or $10^4$ dPa·s. Note that, NBS 710 and NIST 717a were used as reference samples for device calibration.

[$K_{Ic}$]

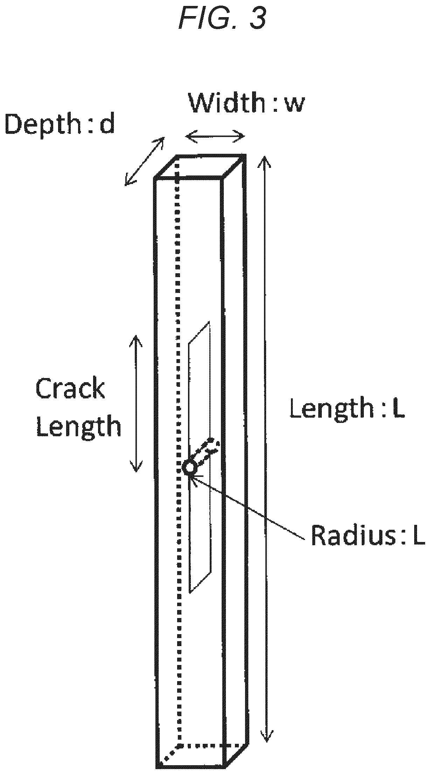

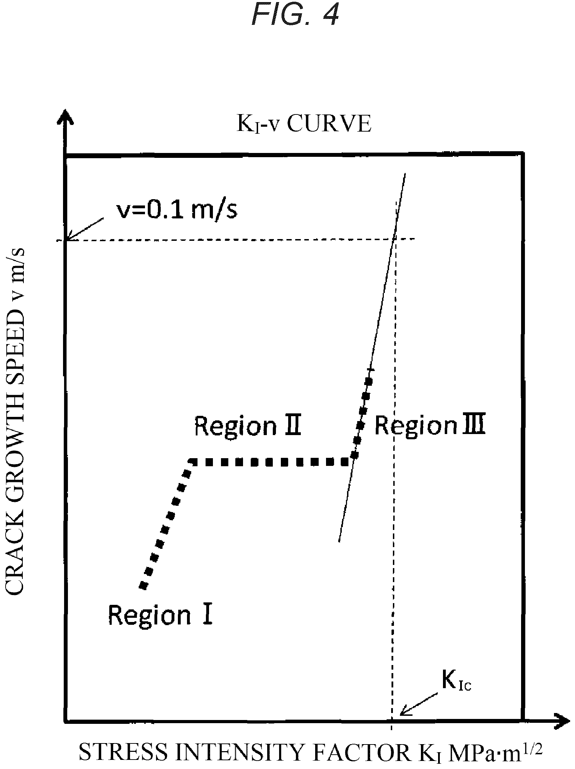

For the fracture toughness value, with reference to the method described in M.Y. He, M.R. Turner and A.G. Evans, Acta Metall. Mater. 43 (1995) 3453., by using the DCDC method, a sample having a shape shown in FIG. 3 and TENSILON UTA-5kN manufactured by ORIENTEC CO., LTD. were used, a $K_I$-v curve showing the relationship between a stress intensity factor $K_I$ (unit: MPa·m$^{1/2}$) and a crack growth rate v (unit: m/s) as shown in FIG. 4 was measured, the obtained data for a Region III was regressed and extrapolated using a linear formula, and the stress intensity factor $K_I$ at 0.1 m/s was defined as the fracture toughness value $K_{Ic}$.

[DSC Peak Temperature and Tg]

The glass was pulverized using an agate mortar, about 80 mg of powder was charged into a platinum cell and heated from room temperature to 1100°C at a temperature rising rate of 10/min, a DSC curve was measured using a differential scanning calorimeter (DSC3300SA manufactured by Bruker Corporation), and the DSC peak temperature (crystallization peak temperature) and the glass transition point Tg were determined.

[Devitrification Temperature]

The devitrification temperature was determined as follows. The glass was pulverized, classified using a sieve with 4 mm mesh and 2 mm mesh, washed with pure water, and then dried to obtain cullet. 2 g to 5 g of cullet was placed on a platinum dish, kept in an electric furnace kept at a constant temperature for 17 hours, and taken out into the air at room temperature and cooled, and then the presence or absence of devitrification was observed repeatedly using a polarizing microscope to estimate the devitrification temperature T.

[Devitrification Viscosity]

The devitrification viscosity was measured using a high temperature rotary viscometer while decreasing the temperature from 1700°C to 1000°C at a rate of 10°C/min (or until the viscosity started to increase rapidly due to devitrification), and the viscosity value at the devitrification temperature was defined as the devitrification viscosity log η (dPa·s).

The results are shown in Tables 1 and 2. In Tables 1 and 2, Examples 1 to 10 and 14 to 16 are Inventive Examples, and Examples 11 to 13 are Comparative Examples. In Tables 1 and 2, numerical values written in italics are calculated values, and "-" indicates that the value has not been evaluated. Example 11 has a glass composition within a composition range described in WO 2019/108751, Example 12 has a glass composition within a composition range described in WO 2019/191480, and Example 13 has a glass composition within a composition range described in WO 2021/108314.

The NaCS and the NaDOL in Tables 1 and 2 are the stress properties of the chemically strengthened glass obtained by chemical strengthening under the above condition A. FIG. 2 shows a stress profile of a chemically strengthened glass obtained by two-stage chemical strengthening of the glass in Example 5 under the above condition B.

The chemically strengthened glass obtained by chemical strengthening of the glass in Example 5 shown in FIG. 2 under the above condition B exhibited the following stress properties. The sheet thickness t is 700 μm.

(C1) surface compressive stress $CS_0$: 1287 MPa.

(C2) when the sheet thickness is t (μm) and the compressive stress layer depth is DOC (μm), DOC/t: 0.17.

(C3) in the stress profile in which the vertical axis is the compressive stress (MPa) and the horizontal axis is the depth (μm) from a surface, the average slope at a depth of 1 μm to 3 μm from the surface: -310.

(C4) in the stress profile in which the vertical axis is the compressive stress (MPa) and the horizontal axis is the depth (μm) from the surface, the average slope in the region from a depth of 20 μm from the surface to the compressive stress layer depth DOC/2 μm: -2.68.

(C5) when the sheet thickness is t (μm), the compressive stress value $CS_{50}$ at a depth of 50 μm from the surface: 0.186t MPa.

(C6) when the sheet thickness is t (μm), the compressive stress value $CS_{90}$ at a depth of 90 μm from the surface: 0.06t MPa.

Table 1

| mol% | Ex. 1 | Ex. 2 | Ex. 3 | Ex. 4 | Ex. 5 | Ex. 6 | Ex. 7 | Ex. 8 |
|---|---|---|---|---|---|---|---|---|
| $SiO_2$ | 57.7 | 53.8 | 58.9 | 52.3 | 57.6 | 56.4 | 56.4 | 56.4 |
| $Al_2O_3$ | 20.0 | 21.0 | 20.0 | 23.0 | 18.8 | 20.0 | 20.0 | 20.0 |
| $B_2O_3$ | 4.6 | 6.0 | 4.6 | 8.0 | 4.6 | 4.6 | 4.6 | 4.6 |
| $P_2O_5$ | 1.4 | 1.4 | 0.0 | 1.4 | 1.4 | 1.4 | 1.4 | 1.4 |
| ZnO | 0.0 | 0.0 | 0.0 | 0.0 | 0.0 | 0.0 | 0.0 | 0.0 |
| MgO | 1.1 | 1.1 | 0.0 | 1.1 | 1.1 | 1.1 | 1.1 | 1.1 |
| CaO | 0.0 | 0.0 | 0.0 | 0.0 | 0.0 | 0.0 | 0.0 | 0.0 |
| $Li_2O$ | 8.0 | 8.0 | 7.7 | 8.0 | 9.7 | 7.7 | 9.7 | 9.7 |
| $Na_2O$ | 7.0 | 7.0 | 8.6 | 6.0 | 6.6 | 8.6 | 6.6 | 6.0 |
| $K_2O$ | 0.1 | 0.1 | 0.1 | 0.1 | 0.1 | 0.1 | 0.1 | 0.7 |
| $ZrO_2$ | 0.0 | 1.5 | 0.0 | 0.0 | 0.0 | 0.0 | 0.0 | 0.0 |
| $Y_2O_3$ | 0.0 | 0.0 | 0.0 | 0.0 | 0.0 | 0.0 | 0.0 | 0.0 |
| $TiO_2$ | 0.1 | 0.1 | 0.1 | 0.1 | 0.1 | 0.1 | 0.1 | 0.1 |
| $SnO_2$ | 0.0 | 0.0 | 0.0 | 0.0 | 0.0 | 0.0 | 0.0 | 0.0 |
| SrO | 0.0 | 0.0 | 0.0 | 0.0 | 0.0 | 0.0 | 0.0 | 0.0 |
| BaO | 0.0 | 0.0 | 0.0 | 0.0 | 0.0 | 0.0 | 0.0 | 0.0 |
| $Fe_2O_3$ | 0.0 | 0.0 | 0.0 | 0.0 | 0.0 | 0.0 | 0.0 | 0.0 |
| $SiO_2+B_2O_3+P_2O_5$ | 63.7 | 61.2 | 63.5 | 61.7 | 63.6 | 62.4 | 62.4 | 62.4 |
| $B_2O_3+P_2O_5$ | 6.0 | 7.4 | 4.6 | 9.4 | 6.0 | 6.0 | 6.0 | 6.0 |
| $Li_2O+Na_2O+K_2O$ | 15.1 | 15.1 | 16.4 | 14.1 | 16.4 | 16.4 | 16.4 | 16.4 |
| $Al_2O_3+B_2O_3$ | 24.6 | 27.0 | 24.6 | 31.0 | 23.4 | 24.6 | 24.6 | 24.6 |
| $Al_2O_3+Li_2O$ | 28.0 | 29.0 | 27.7 | 31.0 | 28.5 | 27.7 | 29.7 | 29.7 |
| $Li_2O/(Na_2O+K_2O)$ | 1.1 | 1.1 | 0.9 | 1.3 | 1.4 | 0.9 | 1.4 | 1.4 |
| $Li_2O/(Li_2O+Na_2O+K_2O)$ | 0.53 | 0.53 | 0.47 | 0.57 | 0.59 | 0.47 | 0.59 | 0.59 |
| $Li_2O/(Al_2O_3+Li_2O)$ | 0.29 | 0.28 | 0.28 | 0.26 | 0.34 | 0.28 | 0.33 | 0.33 |
| [MgO]+[CaO]+[SrO]+[BaO]+[ZnO] | 1.1 | 1.1 | 0.0 | 1.1 | 1.1 | 1.1 | 1.1 | 1.1 |
| Entropy function | 0.315 | 0.315 | 0.315 | 0.313 | 0.307 | 0.315 | 0.307 | 0.353 |
| Specific gravity (g/cm$^3$) | 2.41 | 2.45 | 2.41 | 2.41 | 2.40 | 2.42 | 2.41 | 2.41 |
| Young's modulus (GPa) | 84 | 83 | 81 | 82 | 81 | 81 | 83 | 82 |
| Poisson's ratio | 0.236 | 0.240 | 0.236 | 0.245 | 0.236 | - | - | - |
| NaCS (MPa) | 259 | 246 | 251 | 307 | 360 | 340 | 285 | 285 |
| NaDOL ($\mu$m) | 104 | 86 | 104 | 80 | 107 | 105 | 104 | 110 |
| $T_2$ (°C) | 1590 | 1581 | 1594 | 1587 | 1577 | 1583 | 1579 | 1580 |
| $T_4$ (°C) | 1202 | 1199 | 1205 | 1201 | 1181 | 1193 | 1185 | 1187 |
| $K_{Ic}$ (MPa·m$^{1/2}$) | 0.81 | 0.82 | 0.80 | 0.81 | 0.79 | 0.79 | 0.80 | 0.80 |
| DSC peak temperature (°C) | 857 | 888 | 882 | 862 | 811 | 887 | 802 | 808 |
| Tg (°C) | 588 | 610 | 584 | 600 | 564 | 578 | 573 | 575 |

(continued)

| mol% | Ex. 1 | Ex. 2 | Ex. 3 | Ex. 4 | Ex. 5 | Ex. 6 | Ex. 7 | Ex. 8 |
|---|---|---|---|---|---|---|---|---|
| DCS peak temperature - Tg (°C) | *269* | *278* | *298* | *263* | *247* | *309* | *229* | *233* |
| Devitrification viscosity | 3.1 | - | - | - | 3.7 | - | - | - |
| Devitrification temperature (°C) | 1325 to 1350 | - | - | - | 1220 to 1225 | - | - | - |

Table 2

| mol% | Ex. 9 | Ex. 10 | Ex. 11 | Ex. 12 | Ex. 13 | Ex. 14 | Ex. 15 | Ex. 16 |
|---|---|---|---|---|---|---|---|---|
| $SiO_2$ | 56.4 | 57.4 | 63.2 | 58.2 | 57.6 | 64.3 | 61.0 | 62.5 |
| $Al_2O_3$ | 20.0 | 20.0 | 16.6 | 18.3 | 18.8 | 16.7 | 16.1 | 17.2 |
| $B_2O_3$ | 4.6 | 3.6 | 0.4 | 5.7 | 4.6 | 3.1 | 4.2 | 3.1 |
| $P_2O_5$ | 1.4 | 1.4 | 2.7 | 0.0 | 1.4 | 0.9 | 2.2 | 2.0 |
| ZnO | 0.0 | 0.0 | 0.0 | 0.0 | 0.0 | 0.0 | 0.0 | 0.0 |
| MgO | 0.0 | 0.0 | 0.3 | 4.1 | 1.1 | 0.3 | 0.5 | 1.0 |
| CaO | 1.1 | 1.1 | 0.0 | 0.6 | 0.0 | 1.3 | 1.0 | 2.0 |
| $Li_2O$ | 9.7 | 9.7 | 7.2 | 11.0 | 7.7 | 7.1 | 8.1 | 7.1 |
| $Na_2O$ | 6.0 | 6.0 | 8.9 | 1.9 | 8.6 | 4.8 | 5.0 | 4.1 |
| $K_2O$ | 0.7 | 0.7 | 0.5 | 0.2 | 0.1 | 0.2 | 0.2 | 0.2 |
| $ZrO_2$ | 0.0 | 0.0 | 0.1 | 0.0 | 0.0 | 0.0 | 0.0 | 0.0 |
| $Y_2O_3$ | 0.0 | 0.0 | 0.0 | 0.0 | 0.0 | 0.0 | 0.0 | 0.0 |
| $TiO_2$ | 0.1 | 0.1 | 0.0 | 0.0 | 0.1 | 0.2 | 0.2 | 0.2 |
| $SnO_2$ | 0.0 | 0.0 | 0.0 | 0.0 | 0.0 | 0.0 | 0.0 | 0.0 |
| SrO | 0.0 | 0.0 | 0.0 | 0.0 | 0.0 | 1.0 | 1.5 | 0.5 |
| BaO | 0.0 | 0.0 | 0.0 | 0.0 | 0.0 | 0.0 | 0.0 | 0.0 |
| $Fe_2O_3$ | 0.0 | 0.0 | 0.0 | 0.0 | 0.0 | 0.0 | 0.0 | 0.2 |
| $SiO_2+B_2O_3+P_2O_5$ | 62.4 | 62.4 | 66.3 | 63.9 | 63.6 | 68.3 | 67.4 | 67.6 |
| $B_2O_3+P_2O_5$ | 6.0 | 5.0 | 3.1 | 5.7 | 6.0 | 4.0 | 6.4 | 5.1 |
| $Li_2O+Na_2O+K_2O$ | 16.4 | 16.4 | 16.6 | 13.1 | 16.4 | 12.1 | 13.3 | 11.4 |
| $Al_2O_3+B_2O_3$ | 24.6 | 23.6 | 17.0 | 24.0 | 23.4 | 19.8 | 20.3 | 20.3 |
| $Al_2O_3+Li_2O$ | 29.7 | 29.7 | 23.8 | 29.3 | 26.5 | 23.8 | 24.2 | 24.3 |
| $Li_2O/(Na_2O+K_2O)$ | 1.4 | 1.4 | 0.8 | 5.2 | 0.9 | 1.4 | 1.6 | 1.7 |
| $Li_2O/(Li_2O+Na_2O+K_2O)$ | 0.59 | 0.59 | 0.43 | 0.84 | 0.47 | 0.59 | 0.61 | 0.62 |
| $Li_2O/(Al_2O_3+Li_2O)$ | 0.33 | 0.33 | 0.30 | 0.38 | 0.29 | 0.30 | 0.33 | 0.29 |
| [MgO]+[CaO]+[SrO]+[BaO]+[ZnO] | 1.1 | 1.1 | 0.3 | 4.7 | 1.1 | 2.6 | 3.0 | 3.5 |
| Entropy function | 0.353 | 0.353 | 0.348 | 0.213 | 0.315 | 0.325 | 0.318 | 0.319 |
| Specific gravity (g/cm³) | *79.39* | *78.88* | 2.39 | 2.42 | 2.41 | 2.41 | | |
| Young's modulus (GPa) | *82* | *83* | 75 | 84 | 76 | 80 | 79 | 80 |
| Poisson's ratio | - | - | - | - | - | 0.23 | - | - |
| NaCS (MPa) | *386* | *388* | 233 | 601 | 246 | 260 | - | - |
| NaDOL (μm) | *106* | *105* | 125 | 77.4 | 112 | 119 | - | - |
| $T_2$ (°C) | *1229* | *1229* | 1743 | 1492 | 1650 | 1679 | - | - |

(continued)

| mol% | Ex. 9 | Ex. 10 | Ex. 11 | Ex. 12 | Ex. 13 | Ex. 14 | Ex. 15 | Ex. 16 |
|---|---|---|---|---|---|---|---|---|
| $T_4$ (°C) | 744 | 744 | 1317 | 1126 | 1231 | 1265 | - | - |
| $K_{Ic}$ (MPa·m$^{1/2}$) | 0.80 | 0.80 | 0.73 | 0.86 | 0.77 | 0.801 | - | - |
| DSC peak temperature (°C) | 0 | 0 | 0 | 0 | 0 | - | - | - |
| Tg (°C) | 899 | 888 | 912 | 732 | 896 | - | - | - |
| DCS peak temperature - Tg (°C) | -899 | -888 | -912 | -732 | -896 | - | - | - |
| Devitrification viscosity | - | - | - | - | - | 4.4 | - | - |
| Devitrification temperature (°C) | - | - | - | - | - | 1200.0 | - | - |

As shown in Tables 1 and 2, the glass for chemical strengthening in Examples 1 to 10 and 14 have a surface compressive stress of 200 MPa to 400 MPa and a compressive stress layer depth of 70 $\mu$m to 120 $\mu$m in chemical strengthening, have a CT value not larger than the CT limit, and exhibit excellent strengthening properties that can ensure the drop strength. In addition, the glass for chemical strengthening in Examples 1 to 10 have a lower T2 and T4 than those in Comparative Examples and have more excellent productivity.

The glass for chemical strengthening in Example 11 has [Al$_2$O$_3$]+[Li$_2$O] of less than 27% and a content of B$_2$O$_3$ of less than 2%. The glass for chemical strengthening in Example 11 has a smaller Young's modulus and $K_{Ic}$ and lower strengthening properties (NaCS) than those in Inventive Examples. In addition, the $T_2$ and the $T_4$ thereof are higher than those in Inventive Examples, and the productivity is poor.

The glass for chemical strengthening in Example 12 has a [Li$_2$O]/([Na$_2$O]+[K$_2$O]) ratio of more than 3.5, a content of Na$_2$O of less than 2.5%, and an entropy function of less than 0.25.

It is seen that the glass for chemical strengthening in Example 12 has a too large NaCS compared to Inventive Examples, and there is a risk of an excessive stress to exceed the CT limit, making it difficult to design the stress.

The glass for chemical strengthening in Example 13 has [Al$_2$O$_3$]+[Li$_2$O] of less than 27%. The glass for chemical strengthening in Example 13 has a smaller Young's modulus and lower strengthening properties (NaCS) than those in Inventive Examples. In addition, the $T_2$ thereof is higher than that in Inventive Examples, and the productivity is poor.

As described above, the following matters are disclosed in the present description.

1. A glass for chemical strengthening including, in mol% in terms of oxides:

50% to 65% of SiO$_2$;
15% to 25% of Al$_2$O$_3$;
2% to 10% of B$_2$O$_3$;
0% to 15% of P$_2$O$_5$;
0% to 15% of ZnO;
0% to 10% of MgO;
0% to 15% of CaO;
3% to 15% of Li$_2$O;
2.5% to 15% of Na$_2$O;
0% to 5% of K$_2$O;
0% to 5% of ZrO$_2$;
0% to 5% of Y$_2$O$_3$; and
0% to 5% of TiO$_2$, in which
[Li$_2$O]/([Na$_2$O]+[K$_2$O]) is 0.5 to 3.5, and
[Al$_2$O$_3$]+[Li$_2$O] is 27% to 35%,
provided that in the formulas, [ ] indicates a content of each component described in the parentheses in mol% in terms of oxides.

2. The glass for chemical strengthening according to the above 1, in which an entropy function S value of alkali ions determined by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [ ] indicates a content of each component described in the parentheses in mol% in terms of oxides, and a base of log is 10.

3. The glass for chemical strengthening according to the above 1 or 2, in which

$[SiO_2]+[B_2O_3]+[P_2O_5]$ is 50% to 65%,
$[Li_2O]+[Na_2O]+[K_2O]$ is 14% to 20%,
$[Al_2O_3]+[B_2O_3]$ is 22% to 40%, and
$[B_2O_3]+[P_2O_5]$ is 2% to 10%,
provided that in the formulas, [ ] indicates a content of each component described in the parentheses in mol% in terms of oxides.

4. The glass for chemical strengthening according to any one of the above 1 to 3, in which the following (A1) to (A4) are satisfied:

(A1) a Young's modulus is 80 GPa to 100 GPa,
(A2) in a case of a sheet shape having a thickness of 0.7 mm, when the glass for chemical strengthening is subjected to a chemical strengthening using 100 mass% sodium nitrate at 380°C for 4 hours, a surface compressive stress $CS_0$ is 200 MPa to 450 MPa and a compressive stress layer depth DOC is 70 $\mu$m to 120 $\mu$m,
(A3) a temperature ($T_2$) at which a viscosity is $10^2$ dPa·s is 1650°C or lower, and a temperature ($T_4$) at which the viscosity is $10^4$ dPa·s is 1250°C or lower, and
(A4) a fracture toughness value $K_{Ic}$ is 0.75 MPa·m$^{1/2}$ to 0.85 MPa·m$^{1/2}$.

5. The glass for chemical strengthening according to any one of the above 1 to 4, having a sheet thickness of 0.4 mm to 1.5 mm.

6. The glass for chemical strengthening according to any one of the above 1 to 5, having a sheet thickness of 0.4 mm to 1.2 mm.

7. A glass including, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 27% to 35%, and
an entropy function S value of alkali ions represented by the following formula is 0.25 to 0.40,

$$S = -P_{Li}\times\log(P_{Li}) - P_{Na}\times\log(P_{Na}) - P_K\times\log(P_K)$$

$$P_{Li} = [Li_2O]/([Li_2O]+[Na_2O]+[K_2O])$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_{K} = [K_2O]/([Li_2O]+[Na_2O]+[K_2O])$$

provided that in the formulas, [ ] indicates a content of each component described in the parentheses in mol% in terms of oxides, and a base of log is 10.

8. The glass according to the above 7, in which

in mol% in terms of oxides,
$[SiO_2]+[B_2O_3]+[P_2O_5]$ is 50% to 65%,
$[Li_2O]+[Na_2O]+[K_2O]$ is 14% to 20%,
$[Al_2O_3]+[B_2O_3]$ is 22% to 40%, and
$[B_2O_3]+[P_2O_5]$ is 2% to 10%.

9. The glass according to the above 7 or 8, in which the following (B1) to (B4) are satisfied:

(B1) a Young's modulus is 80 GPa to 100 GPa,
(B2) in a case of a sheet shape having a thickness of 0.7 mm, when the glass is subjected to a chemical strengthening using 100 mass% sodium nitrate at 380°C for 4 hours, a surface compressive stress $CS_0$ is 200 MPa to 450 MPa and a compressive stress layer depth DOC is 70 $\mu$m to 120 $\mu$m,
(B3) a temperature ($T_2$) at which a viscosity is $10^2$ dPa·s is 1650°C or lower, and a temperature ($T_4$) at which the viscosity is $10^4$ dPa·s is 1250°C or lower, and
(B4) a fracture toughness value $K_{Ic}$ is 0.75 MPa·m$^{1/2}$ to 0.85 MPa·m$^{1/2}$.

10. A glass, which is the glass for chemical strengthening according to any one of the above 1 to 6 in which a compressive stress layer is formed, in which
the glass has the following stress properties (C1) to (C6):

(C1) a surface compressive stress $CS_0$ is 500 MPa or more,
(C2) when a sheet thickness is t ($\mu$m) and a compressive stress layer depth is DOC ($\mu$m), DOC/t is 0.125 to 0.225,
(C3) in a stress profile in which a vertical axis is a compressive stress (MPa) and a horizontal axis is a depth ($\mu$m) from a surface, an average slope at a depth of 1 $\mu$m to 3 $\mu$m from the surface is more than -400 and less than -100,
(C4) in the stress profile in which the vertical axis is the compressive stress (MPa) and the horizontal axis is the depth ($\mu$m) from the surface, an average slope in a region from a depth of 20 $\mu$m from the surface to a compressive stress layer depth DOC/2 $\mu$m is more than -4 and less than -1.5,
(C5) when the sheet thickness is t ($\mu$m), a compressive stress value $CS_{50}$ at a depth of 50 $\mu$m from the surface is 0.1t (MPa) or more, and
(C6) when the sheet thickness is t ($\mu$m), a compressive stress value $CS_{90}$ at a depth of 90 $\mu$m from the surface is 0.03t (MPa) or more.

11. The glass according to any one of the above 7 to 9, which is a glass for chemical strengthening.
12. A $Li_2O$-$Al_2O_3$-$SiO_2$-based glass for chemical strengthening, including:

2% or more of $B_2O_3$ in mol% in terms of oxides, in which
a Young's modulus is more than 76 GPa,
a surface compressive stress $CS_0$ is 200 MPa to 450 MPa and a compressive stress layer depth DOC is 70 $\mu$m to 120 $\mu$m when chemical strengthening is performed using 100 mass% sodium nitrate at 380°C for 4 hours, and
a temperature ($T_2$) at which a viscosity is $10^2$ dPa·s is 1650°C or lower.

13. A glass for chemical strengthening including, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 22% to 35%, and
a Young's modulus is 77 GPa or more,
provided that in the formulas, [ ] indicates a content of each component described in the parentheses in mol% in terms of oxides.

14. The glass for chemical strengthening according to the above 13, in which an entropy function S value of alkali ions determined by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [ ] indicates a content of each component described in the parentheses in mol% in terms of oxides, and a base of log is 10.

15. The glass for chemical strengthening according to the above 13 or 14, in which

$[SiO_2]+[B_2O_3]+[P_2O_5]$ is 50% to 69%,
$[Li_2O]+[Na_2O]+[K_2O]$ is 12% to 20%,
$[Al_2O_3]+[B_2O_3]$ is 19% to 40%, and
$[B_2O_3]+[P_2O_5]$ is 2% to 10%,
provided that in the formulas, [ ] indicates a content of each component described in the parentheses in mol% in terms of oxides.

16. The glass for chemical strengthening according to the above 13 or 14, including, in mol% in terms of oxides:

56% to 65% of $SiO_2$;
16% to 25% of $Al_2O_3$;
3% to 5% of $B_2O_3$;
0.7% to 1.5% of $P_2O_5$;
0% to 15% of ZnO;
more than 0% and 1.5% or less of MgO;
0% to 15% of CaO;
3% to 15% of $Li_2O$;
2.5% to 15% of $Na_2O$;
more than 0% and 5% or less of $K_2O$;
0% to 5% of $ZrO_2$;
0% to 5% of $Y_2O_3$;

more than 0% and 1% or less of $TiO_2$; and
0% to 1.2% of SrO, in which
$[Li_2O]/([Na_2O]+[K_2O])$ is 0.5 to 3.5,
$[MgO]+[CaO]+[SrO]+[BaO]+[ZnO]$ is 1% to 3%,
$[Li_2O]/([Li_2O]+[Na_2O]+[K_2O])$ is 0.50 to 0.65, and
$[Al_2O_3]+[Li_2O]$ is 22% to 35%,
provided that in the formulas, [ ] indicates a content of each component described in the parentheses in mol% in terms of oxides.

17. The glass for chemical strengthening according to the above 16, including more than 0.1% and 1% or less of $TiO_2$ in mol% in terms of oxides.

18. The glass for chemical strengthening according to the above 16 or 17, in which $[Na_2O]+[K_2O]$ is 0% to 8% in mol% in terms of oxides,
provided that in the formula, [ ] indicates a content of each component described in the parentheses in mol% in terms of oxides.

19. The glass for chemical strengthening according to any one of the above 16 to 18, in which $[MgO]+[CaO]+[SrO]+[BaO]+[ZnO]$ is 1% to 2.8% in mol% in terms of oxides,
provided that in the formula, [ ] indicates a content of each component described in the parentheses in mol% in terms of oxides.

20. A glass including, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, in which
$[Li_2O]/([Na_2O]+[K_2O])$ is 0.5 to 3.5,
$[Al_2O_3]+[Li_2O]$ is 22% to 35%,
a Young's modulus is 77 GPa or more, and
an entropy function S value of alkali ions represented by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [ ] indicates a content of each component described in the parentheses in mol% in terms of oxides, and a base of log is 10.

21. The glass according to the above 20, in which

in mol% in terms of oxides,
$[SiO_2]+[B_2O_3]+[P_2O_5]$ is 50% to 69%,
$[Li_2O]+[Na_2O]+[K_2O]$ is 12% to 20%,

$[Al_2O_3]+[B_2O_3]$ is 19% to 40%, and
$[B_2O_3]+[P_2O_5]$ is 2% to 10%.

22. The glass according to the above 20 or 21, including, in mol% in terms of oxides:

56% to 65% of $SiO_2$;
16% to 25% of $Al_2O_3$;
3% to 5% of $B_2O_3$;
0.7% to 1.5% of $P_2O_5$;
0% to 15% of ZnO;
more than 0% and 1.5% or less of MgO;
0% to 15% of CaO;
3% to 15% of $Li_2O$;
2.5% to 15% of $Na_2O$;
more than 0% and 5% or less of $K_2O$;
0% to 5% of $ZrO_2$;
0% to 5% of $Y_2O_3$;
more than 0% and 1% or less of $TiO_2$; and
0% to 1.2% of SrO, in which
$[Li_2O]/([Na_2O]+[K_2O])$ is 0.5 to 3.5,
$[MgO]+[CaO]+[SrO]+[BaO]+[ZnO]$ is 1% to 3%,
$[Li_2O]/([Li_2O]+[Na_2O]+[K_2O])$ is 0.50 to 0.65, and
$[Al_2O_3]+[Li_2O]$ is 22% to 35%,
provided that in the formulas, [ ] indicates a content of each component described in the parentheses in mol% in terms of oxides.

23. The glass according to any one of the above 20 to 22, including more than 0.1% and 1% or less of $TiO_2$ in mol% in terms of oxides.

24. The glass according to any one of the above 20 to 23, in which $[Na_2O]+[K_2O]$ is 0% to 8% in mol% in terms of oxides,
provided that in the formula, [ ] indicates a content of each component described in the parentheses in mol% in terms of oxides.

25. The glass according to any one of the above 20 to 24, in which $[MgO]+[CaO]+[SrO]+[BaO]+[ZnO]$ is 1% to 2.8% in mol% in terms of oxides,
provided that in the formula, [ ] indicates a content of each component described in the parentheses in mol% in terms of oxides.

Although the present invention has been described in detail with reference to specific aspects, it is apparent to those skilled in the art that various changes and modifications can be made without departing from the spirit and scope of the present invention. Note that, the present application is based on a Japanese patent application (No. 2022-096854) filed on June 15, 2022 and a Japanese patent application (No. 2022-210494) filed on December 27, 2022, contents of which are incorporated herein by reference. In addition, all references cited here are entirely incorporated.

**Claims**

1.  A glass for chemical strengthening comprising, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;

0% to 5% of $ZrO_2$;
0% to 5% of $Y_2O_3$; and
0% to 5% of $TiO_2$, wherein
$[Li_2O]/([Na_2O]+[K_2O])$ is 0.5 to 3.5, and
$[Al_2O_3]+[Li_2O]$ is 27% to 35%,
provided that in the formulas, [ ] indicates a content of each component described in the parentheses in mol% in terms of oxides.

2. The glass for chemical strengthening according to claim 1, wherein an entropy function S value of alkali ions determined by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$P_K = [K_2O]/([Li_2O]+[Na_2O]+[K_2O])$ provided that in the formulas, [ ] indicates a content of each component described in the parentheses in mol% in terms of oxides, and a base of log is 10.

3. The glass for chemical strengthening according to claim 1, wherein

$[SiO_2]+[B_2O_3]+[P_2O_5]$ is 50% to 65%,
$[Li_2O]+[Na_2O]+[K_2O]$ is 14% to 20%,
$[Al_2O_3]+[B_2O_3]$ is 22% to 40%, and
$[B_2O_3]+[P_2O_5]$ is 2% to 10%,
provided that in the formulas, [ ] indicates a content of each component described in the parentheses in mol% in terms of oxides.

4. The glass for chemical strengthening according to any one of claims 1 to 3, wherein the following (A1) to (A4) are satisfied:

(A1) a Young's modulus is 80 GPa to 100 GPa,
(A2) in a case of a sheet shape having a thickness of 0.7 mm, when the glass for chemical strengthening is subjected to a chemical strengthening using 100 mass% sodium nitrate at 380°C for 4 hours, a surface compressive stress $CS_0$ is 200 MPa to 450 MPa and a compressive stress layer depth DOC is 70 $\mu$m to 120 $\mu$m,
(A3) a temperature ($T_2$) at which a viscosity is $10^2$ dPa·s is 1650°C or lower, and a temperature ($T_4$) at which the viscosity is $10^4$ dPa·s is 1250°C or lower, and
(A4) a fracture toughness value $K_{Ic}$ is 0.75 MPa·m$^{1/2}$ to 0.85 MP$_{a \cdot m}$$^{1/2}$.

5. The glass for chemical strengthening according to any one of claims 1 to 3, having a sheet thickness of 0.4 mm to 1.5 mm.

6. The glass for chemical strengthening according to any one of claims 1 to 3, having a sheet thickness of 0.4 mm to 1.2 mm.

7. A glass comprising, in mol% in terms of oxides:

50% to 65% of $SiO_2$;
15% to 25% of $Al_2O_3$;
2% to 10% of $B_2O_3$;
0% to 15% of $P_2O_5$;
0% to 15% of ZnO;
0% to 10% of MgO;
0% to 15% of CaO;

3% to 15% of $Li_2O$;
2.5% to 15% of $Na_2O$,
0% to 5% of $K_2O$;
0% to 5% of $ZrO_2$;
0% to 5% of $Y_2O_3$; and
0% to 5% of $TiO_2$, wherein
$[Li_2O]/([Na_2O]+[K_2O])$ is 0.5 to 3.5,
$[Al_2O_3]+[Li_2O]$ is 27% to 35%, and
an entropy function S value of alkali ions represented by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [] indicates a content of each component described in the parentheses in mol% in terms of oxides, and a base of log is 10.

8.  The glass according to claim 7, wherein

in mol% in terms of oxides,
$[SiO_2]+[B_2O_3]+[P_2O_5]$ is 50% to 65%,
$[Li_2O]+[Na_2O]+[K_2O]$ is 14% to 20%,
$[Al_2O_3]+[B_2O_3]$ is 22% to 40%, and
$[B_2O_3]+[P_2O_5]$ is 2% to 10%.

9.  The glass according to claim 7 or 8, wherein the following (B1) to (B4) are satisfied:

(B1) a Young's modulus is 80 GPa to 100 GPa,
(B2) in a case of a sheet shape having a thickness of 0.7 mm, when the glass is subjected to a chemical strengthening using 100 mass% sodium nitrate at 380°C for 4 hours, a surface compressive stress $CS_0$ is 200 MPa to 450 MPa and a compressive stress layer depth DOC is 70 $\mu$m to 120 $\mu$m,
(B3) a temperature ($T_2$) at which a viscosity is $10^2$ dPa·s is 1650°C or lower, and a temperature ($T_4$) at which the viscosity is $10^4$ dPa·s is 1250°C or lower, and
(B4) a fracture toughness value $K_{Ic}$ is 0.75 MPa·m$^{1/2}$ to 0.85 MP$_{a·m}$$^{1/2}$.

10. A glass, which is the glass for chemical strengthening according to any one of claims 1 to 3 in which a compressive stress layer is formed, wherein
the glass has the following stress properties (C1) to (C6):

(C1) a surface compressive stress $CS_0$ is 500 MPa or more,
(C2) when a sheet thickness is t ($\mu$m) and a compressive stress layer depth is DOC ($\mu$m), DOC/t is 0.125 to 0.225,
(C3) in a stress profile in which a vertical axis is a compressive stress (MPa) and a horizontal axis is a depth ($\mu$m) from a surface, an average slope at a depth of 1 $\mu$m to 3 $\mu$m from the surface is more than -400 and less than -100,
(C4) in the stress profile in which the vertical axis is the compressive stress (MPa) and the horizontal axis is the depth ($\mu$m) from the surface, an average slope in a region from a depth of 20 $\mu$m from the surface to a compressive stress layer depth DOC/2 $\mu$m is more than -4 and less than -1.5,
(C5) when the sheet thickness is t ($\mu$m), a compressive stress value $CS_{50}$ at a depth of 50 $\mu$m from the surface is 0.1t (MPa) or more, and
(C6) when the sheet thickness is t ($\mu$m), a compressive stress value $CS_{90}$ at a depth of 90 $\mu$m from the surface is 0.03t (MPa) or more.

**11.** The glass according to claim 7 or 8, which is a glass for chemical strengthening.

**12.** A $Li_2O$-$Al_2O_3$-$SiO_2$-based glass for chemical strengthening, comprising:

2% or more of $B_2O_3$ in mol% in terms of oxides, wherein
a Young's modulus is more than 76 GPa,
a surface compressive stress $CS_0$ is 200 MPa to 450 MPa and a compressive stress layer depth DOC is 70 $\mu$m to 120 $\mu$m when chemical strengthening is performed using 100 mass% sodium nitrate at 380°C for 4 hours, and
a temperature ($T_2$) at which a viscosity is $10^2$ dPa·s is 1650°C or lower.

**13.** A glass for chemical strengthening comprising, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, wherein
$[Li_2O]/([Na_2O]+[K_2O])$ is 0.5 to 3.5,
$[Al_2O_3]+[Li_2O]$ is 22% to 35%, and
a Young's modulus is 77 GPa or more,
provided that in the formulas, [] indicates a content of each component described in the parentheses in mol% in terms of oxides.

**14.** The glass for chemical strengthening according to claim 13, wherein an entropy function S value of alkali ions determined by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [] indicates a content of each component described in the parentheses in mol% in terms of oxides, and a base of log is 10.

**15.** The glass for chemical strengthening according to claim 13 or 14, wherein

$[SiO_2]+[B_2O_3]+[P_2O_5]$ is 50% to 69%,
$[Li_2O]+[Na_2O]+[K_2O]$ is 12% to 20%,
$[Al_2O_3]+[B_2O_3]$ is 19% to 40%, and
$[B_2O_3]+[P_2O_5]$ is 2% to 10%,
provided that in the formulas, [] indicates a content of each component described in the parentheses in mol% in terms of oxides.

**16.** The glass for chemical strengthening according to claim 13 or 14, comprising, in mol% in terms of oxides:

56% to 65% of $SiO_2$;
16% to 25% of $Al_2O_3$;
3% to 5% of $B_2O_3$;
0.7% to 1.5% of $P_2O_5$;
0% to 15% of ZnO;
more than 0% and 1.5% or less of MgO;
0% to 15% of CaO;
3% to 15% of $Li_2O$;
2.5% to 15% of $Na_2O$;
more than 0% and 5% or less of $K_2O$;
0% to 5% of $ZrO_2$;
0% to 5% of $Y_2O_3$;
more than 0% and 1% or less of $TiO_2$; and
0% to 1.2% of SrO, wherein
$[Li_2O]/([Na_2O]+[K_2O])$ is 0.5 to 3.5,
$[MgO]+[CaO]+[SrO]+[BaO]+[ZnO]$ is 1% to 3%,
$[Li_2O]/([Li_2O]+[Na_2O]+[K_2O])$ is 0.50 to 0.65, and
$[Al_2O_3]+[Li_2O]$ is 22% to 35%,
provided that in the formulas, [] indicates a content of each component described in the parentheses in mol% in terms of oxides.

17. The glass for chemical strengthening according to claim 16, comprising more than 0.1% and 1% or less of $TiO_2$ in mol% in terms of oxides.

18. The glass for chemical strengthening according to claim 16, wherein $[Na_2O]+[K_2O]$ is 0% to 8% in mol% in terms of oxides,
provided that in the formula, [] indicates a content of each component described in the parentheses in mol% in terms of oxides.

19. The glass for chemical strengthening according to claim 16, wherein $[MgO]+[CaO]+[SrO]+[BaO]+[ZnO]$ is 1% to 2.8% in mol% in terms of oxides,
provided that in the formula, [] indicates a content of each component described in the parentheses in mol% in terms of oxides.

20. A glass comprising, in mol% in terms of oxides:

50% to 67% of $SiO_2$;
16% to 25% of $Al_2O_3$;
2% to 10% of $B_2O_3$;
0% to 15% of $P_2O_5$;
0% to 15% of ZnO;
0% to 10% of MgO;
0% to 15% of CaO;
3% to 15% of $Li_2O$;
2.5% to 15% of $Na_2O$;
0% to 5% of $K_2O$;
0% to 5% of $ZrO_2$;
0% to 5% of $Y_2O_3$; and
0% to 5% of $TiO_2$, wherein
$[Li_2O]/([Na_2O]+[K_2O])$ is 0.5 to 3.5,
$[Al_2O_3]+[Li_2O]$ is 22% to 35%,
a Young's modulus is 77 GPa or more, and
an entropy function S value of alkali ions represented by the following formula is 0.25 to 0.40,

$$S = -P_{Li} \times \log(P_{Li}) - P_{Na} \times \log(P_{Na}) - P_K \times \log(P_K)$$

$$P_{Li} = [Li_2O]/([Li_2O]+[Na_2O]+[K_2O])$$

$$P_{Na} = [Na_2O]/([Li_2O]+[Na_2O]+[K_2O])$$

$$P_K = [K_2O]/([Li_2O]+[Na_2O]+[K_2O])$$

provided that in the formulas, [] indicates a content of each component described in the parentheses in mol% in terms of oxides, and a base of log is 10.

21. The glass according to claim 20, wherein

in mol% in terms of oxides,
$[SiO_2]+[B_2O_3]+[P_2O_5]$ is 50% to 69%,
$[Li_2O]+[Na_2O]+[K_2O]$ is 12% to 20%,
$[Al_2O_3]+[B_2O_3]$ is 19% to 40%, and
$[B_2O_3]+[P_2O_5]$ is 2% to 10%.

22. The glass according to claim 20 or 21, comprising, in mol% in terms of oxides:

56% to 65% of $SiO_2$;
16% to 25% of $Al_2O_3$;
3% to 5% of $B_2O_3$;
0.7% to 1.5% of $P_2O_5$;
0% to 15% of ZnO;
more than 0% and 1.5% or less of MgO;
0% to 15% of CaO;
3% to 15% of $Li_2O$;
2.5% to 15% of $Na_2O$;
more than 0% and 5% or less of $K_2O$;
0% to 5% of $ZrO_2$;
0% to 5% of $Y_2O_3$;
more than 0% and 1% or less of $TiO_2$; and
0% to 1.2% of SrO, wherein
$[Li_2O]/([Na_2O]+[K_2O])$ is 0.5 to 3.5,
$[MgO]+[CaO]+[SrO]+[BaO]+[ZnO]$ is 1% to 3%,
$[Li_2O]/([Li_2O]+[Na_2O]+[K_2O])$ is 0.50 to 0.65, and
$[Al_2O_3]+[Li_2O]$ is 22% to 35%,
provided that in the formulas, [] indicates a content of each component described in the parentheses in mol% in terms of oxides.

23. The glass according to claim 22, comprising more than 0.1% and 1% or less of $TiO_2$ in mol% in terms of oxides.

24. The glass according to claim 22, wherein $[Na_2O]+[K_2O]$ is 0% to 8% in mol% in terms of oxides,
provided that in the formula, [] indicates a content of each component described in the parentheses in mol% in terms of oxides.

25. The glass according to claim 22, wherein $[MgO]+[CaO]+[SrO]+[BaO]+[ZnO]$ is 1% to 2.8% in mol% in terms of oxides,
provided that in the formula, [] indicates a content of each component described in the parentheses in mol% in terms of oxides.

*FIG. 1*

EP 4 541 777 A1

FIG. 2

## FIG. 3

Depth : d

Width : w

Crack Length

Length : L

Radius : L

## FIG. 4

$K_I$-v CURVE

v=0.1 m/s

CRACK GROWTH SPEED v m/s

Region II    Region III

Region I

$K_{Ic}$

STRESS INTENSITY FACTOR $K_I$ MPa·m$^{1/2}$

## INTERNATIONAL SEARCH REPORT

| International application No. |
| --- |
| **PCT/JP2023/021632** |

### A. CLASSIFICATION OF SUBJECT MATTER

*C03C 3/091*(2006.01)i; *C03C 3/093*(2006.01)i; *C03C 21/00*(2006.01)i
FI:  C03C3/091; C03C3/093; C03C21/00 101

According to International Patent Classification (IPC) or to both national classification and IPC

### B. FIELDS SEARCHED

Minimum documentation searched (classification system followed by classification symbols)

C03C1/00-14/00; C03C21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

### C. DOCUMENTS CONSIDERED TO BE RELEVANT

| Category* | Citation of document, with indication, where appropriate, of the relevant passages | Relevant to claim No. |
| --- | --- | --- |
| X | US 2021/0155528 A1 (CORNING INC.) 27 May 2021 (2021-05-27) table II, compositions 23, 36, 49, 77, paragraph [0087] | 1-2, 4-7, 9-15, 20-21 |
| A | | 3, 8, 16-19, 22-25 |
| X | WO 2017/126607 A1 (ASAHI GLASS CO., LTD.) 27 July 2017 (2017-07-27) table 17, examples 2-13 | 1, 3-6, 10, 12-13, 15 |
| A | | 2, 7-9, 11, 14, 16-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 July 2023** | **25 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/021632**

| Patent document cited in search report | | | Publication date (day/month/year) | Patent family member(s) | | | Publication date (day/month/year) |
|---|---|---|---|---|---|---|---|
| US | 2021/0155528 | A1 | 27 May 2021 | JP 2023-503878 A table II, compositions 23, 36, 49, 77, paragraph [0103] CN 114728835 A KR 10-2022-0108071 A | | | |
| WO | 2017/126607 | A1 | 27 July 2017 | US 2018/0186685 A1 table 17, examples 2-13 CN 108473370 A KR 10-2018-0098535 A | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013536155 A
- WO 2019108751 A
- WO 2019191480 A
- WO 2021108314 A
- JP 2022096854 A
- JP 2022210494 A

**Non-patent literature cited in the description**

- **M.Y. HE** ; **M.R. TURNER** ; **A.G. EVANS**. *Acta Metall. Mater.*, 1995, vol. 43, 3453